(19) Europäisches Patentamt
European Patent Office
Office européen des brevets

(11) **EP 3 318 495 B1**

(12) **EUROPEAN PATENT SPECIFICATION**

(45) Date of publication and mention
of the grant of the patent:
**23.12.2020 Bulletin 2020/52**

(51) Int Cl.:
**B64D 35/08** *(2006.01)* **B64D 31/06** *(2006.01)*
**B64D 27/16** *(2006.01)* **B64D 27/24** *(2006.01)*
**B64D 27/02** *(2006.01)* **F02C 7/36** *(2006.01)*

(21) Application number: **17180516.1**

(22) Date of filing: **10.07.2017**

(54) **SYSTEM AND METHOD FOR TEMPORARY AUGMENTING POWER FROM A PRIMARY POWER PLANT**

SYSTEM UND VERFAHREN ZUR ERWEITERUNG DER KRAFT VON EINEM TRIEBWERK

SYSTÈME ET PROCÉDÉ PERMETTANT D'AUGMENTER UNE PUISSANCE PROVENANT D'UNE SOURCE PRIMAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2016 US 201615343116**

(43) Date of publication of application:
**09.05.2018 Bulletin 2018/19**

(73) Proprietor: **The Boeing Company**
**Chicago, IL 60606-2016 (US)**

(72) Inventors:
• **GOLSHANY, Sina S.**
**LYNWOOD, WA Washington 98087 (US)**
• **ERICKSON, Todd W.**
**SEATTLE, WA Washington 98124 (US)**
• **ALDERKS, Derek R.**
**SEATTLE, WA Washington 98124 (US)**

(74) Representative: **Plasseraud IP**
**66, rue de la Chaussée d'Antin**
**75440 Paris Cedex 09 (FR)**

(56) References cited:
**EP-A2- 1 931 018       EP-A2- 2 270 326**
**WO-A1-2016/049030**

**Description**

**FIELD OF THE DISCLOSURE**

The present disclosure is generally related to a propulsion system including an augmenting powerplant.

**BACKGROUND**

When designing an aircraft, engines are designed in accordance with Federal Aviation Regulations (FAR). Aircraft engines are typically sized by takeoff thrust requirements and one-engine inoperative climb thrust requirements of the FAR. These requirements result in an aircraft engine (e.g., an engine core) that is able to cycle larger quantities of air (i.e. have a higher air mass-flow rate) during takeoff operations and climb operations than is optimal for cruise operations. A diameter of rotating machinery within the engine core is based on a maximum mass-flow rate. Thus, an aircraft engine core satisfying the takeoff and climb thrust requirements may have a larger diameter than is optimal for cruise operations. During a cruise flight stage, a rotation rate of the turbo-mechanical components of the engine is lowered to achieve the mass-flow rate for cruise operations. Typically, the efficiency of the engine (e.g., compressors and turbines of the engine) is a first order function of the revolutions per minute (RPM), and running at slower (or faster) RPMs than their aerodynamic optima reduces engine efficiency.

EP2270326 concerns a turbofan engine having primary power units and an auxiliary power unit. The auxiliary power unit is contemplated as electric power unit and is coupleable to a drive shaft via a clutch.

**SUMMARY**

The present disclosure is related to an aircraft propulsion system as defined in claim 1 and a method of controlling said propulsion system as defined in claim 7.

In a particular implementation, an aircraft propulsion system includes a fan, a primary powerplant, an augmenting powerplant and a controller according to claim 1. The primary powerplant is coupled to the fan and configured to rotate the fan during a first flight stage and during a second flight stage. The augmenting powerplant is coupleable to the fan. The controller is configured to cause the augmenting powerplant to drive the fan during the first flight stage, and to cause the augmenting powerplant to cease driving the fan based on an indication of a transition from the first flight stage to the second flight stage.

In another particular implementation, an aircraft propulsion system includes a fan, a primary powerplant, an augmenting powerplant and a controller. The primary powerplant is coupled to the fan and configured to rotate the fan during a first flight stage and during a second flight stage. The augmenting powerplant is coupled to the fan. The controller is configured to cause the augmenting powerplant to drive the fan during the first flight stage, and to cause the augmenting powerplant to cease driving the fan based on an indication of a transition from the first flight stage to the second flight stage.

In another particular implementation, a method of controlling a propulsion system includes, during a first flight stage, causing a primary powerplant to drive a fan of an aircraft and causing an augmenting powerplant to drive the fan. The method also includes detecting an indication of a transition from the first flight stage to a second flight stage. The method further includes based on detecting the indication, causing the augmenting powerplant to cease driving the fan.

**BRIEF DESCRIPTION OF THE DRAWINGS**

FIG. 1 is a schematic block diagram illustration of an aircraft comprising a contra-rotating open fan propulsion system, according to aspects;

FIG. 2A is a schematic illustration of a drive assembly, according to a first aspect;

FIG. 2B is another schematic illustration of the drive assembly, according to the first aspect;

FIG. 2C is a schematic illustration of a propulsion system, according to a first aspect;

FIG. 3A is a schematic illustration of a drive assembly, according to a second aspect;

FIG. 3B is another schematic illustration of the drive assembly, according to the second aspect;

FIG. 3C is a schematic illustration of a propulsion system, according to the second aspect;

FIG. 4A is schematic illustration of the drive assembly, according to a third aspect;

FIG. 4B is schematic illustration of the drive assembly, according to the third aspect;

FIG. 4C is a schematic illustration of a propulsion system, according to the third aspect;

FIG. 5A is an example of a hydraulic circuit according to a first aspect;

FIG. 5B is another example of a hydraulic circuit according to second aspect;

FIG. 6 is a block diagram that illustrates an example of a propulsion system that includes an augmenting powerplant;

FIG. 7 is a diagram that illustrates exemplary configurations of a propulsion system that includes an augmenting powerplant;

FIG. 8 is a diagram that illustrates an example of a propulsion system that includes a hydraulic augmenting powerplant;

FIG. 9A is a diagram that illustrates an example of a propulsion system that includes a hydraulic augmenting powerplant;

FIG. 9B is a diagram that illustrates an example of a propulsion system that includes a hydraulic augmenting powerplant;

FIG. 10 is a diagram that illustrates an example of a propulsion system that includes an electric augmenting powerplant;

FIG. 11 is a flow chart of an example of a method of using propulsion system that includes an augmenting powerplant; and

FIG. 12 is a block diagram of an illustrative implementation of an aircraft including a propulsion system that includes an augmenting powerplant.

## DETAILED DESCRIPTION

Implementations disclosed herein are directed to an aircraft propulsion system including two sources of power to operate an aircraft. A primary powerplant (e.g., a gas turbine engine) is the primary source of power and is operable during all phases of operation. An augmenting powerplant (e.g., a hydraulic motor, a pneumatic motor, or an electric motor) is a secondary source of power during certain phases of operation.

As an illustrative, non-limiting example, during a first flight stage (e.g., takeoff), energy stored within an accumulator is provided to a hydraulic motor and the combined power of the primary powerplant and the hydraulic motor provides sufficient thrust during takeoff to meet Federal Aviation Regulations (e.g., FAR 25.111 et al). During cruise conditions, the power from the hydraulic motor is not needed, and the primary powerplant provides power to generate thrust. The augmenting powerplant enables the primary powerplant to be designed and sized (e.g., optimized) for cruise conditions and the propulsion system as a whole (e.g., the primary powerplant and the augmenting powerplant) to be designed and sized for takeoff conditions. A powerplant optimized to operate in a regular flight profile (e.g., cruise conditions) excluding the takeoff and climb thrust requirements, has superior efficiency at cruise compared to another powerplant designed to satisfy FAR thrust requirements (e.g., engine inoperative takeoff and climb-out). For example, a powerplant optimized to operate in a regular flight profile has superior fuel economy and thrust specific fuel consumption at cruise compared to another powerplant designed to satisfy FAR thrust requirements.

As the cruise segment is typically the longest phase of the flight, the aircraft typically burns most of its fuel during the cruise segment. Therefore, any improvement in engine fuel efficiency in the cruise flight phase has a significant effect on the overall fuel burn performance of the aircraft and the overall emissions of the aircraft. In comparison to the cruise phase, the takeoff and climb-out often occupy a small fraction of the total flight time or fuel burn.

In the following description, numerous specific details are set forth to provide a thorough understanding of various embodiments. However, it will be understood by those skilled in the art that the various embodiments may be practiced without the specific details. In other instances, well-known methods, procedures, components, and circuits have not been illustrated or described in detail so as not to obscure the particular embodiments.

In some implementations, the propulsion system (e.g., the primary powerplant) may include a contra-rotating propulsor system. Contra-rotating propulsor systems generate significant noise due at least in part to air turbulence due to interaction between the two rows of contra-rotating blades. For example, noise is generated when the aft row of blades traverse the low pressure wake generated behind the front row of blades.

The interaction noise is typically comprised of tones resonating at the first blade passage frequency or any integer harmonics of this frequency. Ideal blade passage frequency for a contra-rotating propulsor may be determined using equation 1:

$$\text{EQ (1)} \qquad \Omega_{BPF} = n\left(B_1\Omega_1 - B_2\Omega_2\right)$$

In equation (1), $\Omega_{BPF}$ denotes blade passage frequency, n denotes rotation velocity, $B_1$ denotes front row number of blades, $B_2$ denotes aft row number of blades, $\Omega_1$ denotes front row rotational speed and $\Omega_2$ denotes the aft row rotational speed. Both $\Omega_1$ and $\Omega_2$ are defined to have positive values in the clockwise direction and negative values in the counter clockwise direction.

To eliminate the rotor-to-rotor interaction noise, one would ideally prefer the blade passage frequency to tend to zero. By mathematical deduction, one could observe that blade passage frequency will tend to zero if $B_1$ and $B_2$ as well as $\Omega_1$ and $\Omega_2$ are equal. This is equivalent to a case where both front and aft row have the same number of blades and rotate with exactly the same rotational speed and in the same direction.

Exemplary drive assembly configurations for contra-rotating engine systems, and propulsion systems and aircraft incorporating such drive assembly configurations are described herein as one, non-limiting example of a propulsion system. In various aspects, a drive assembly is provided with a clutch assembly to selectively disengage the aft fan of a contra-rotating fan engine system from the driveshaft which provides power to the aft fan. The clutch assembly may be provided as an integral part of the fan gearbox or installed on the output of the fan gearbox.

In some aspects the pitch of the aft row blades may be changed to facilitate its passive rotation, i.e., to windmill under the influence of airflow from the forward fan in the same direction as the forward fan. In other aspects the aft fan may be allowed to spin down under the resistance of the clutch assembly, then reengaged to the driveshaft via a gearbox which drives the aft fan in the same direction as the forward fan. In other aspects, a braking system may be incorporated as an integral part of the clutch assembly to facilitate a faster transition between the two modes. Such system would selectively increasing the resistance induced by the clutch assembly by hydraulic means which leads to a shorter spin-down time for the aft rotor. Thus, a drive assembly constructed in accordance with aspects described herein enables the aft fan of a contra-rotating engine system to be selectively disengaged and fan blades re-pitched, e.g., during landing and takeoff flight segments or other flight segments in which reducing noise from the aircraft may be useful, and subsequently may be reengaged to drive the aft fan in a contra-rotating configuration.

As used herein, a "clutch" refers to a device that provides for selective regulation of transmission of torque from the driving component (power source) to the driven component (fan system) when engaged, but it can be disengaged, or partially engaged to allow the continued transmission of a fractional proportion of power. A clutch could be either a friction clutch (wet or dry) or a fluid coupling device.

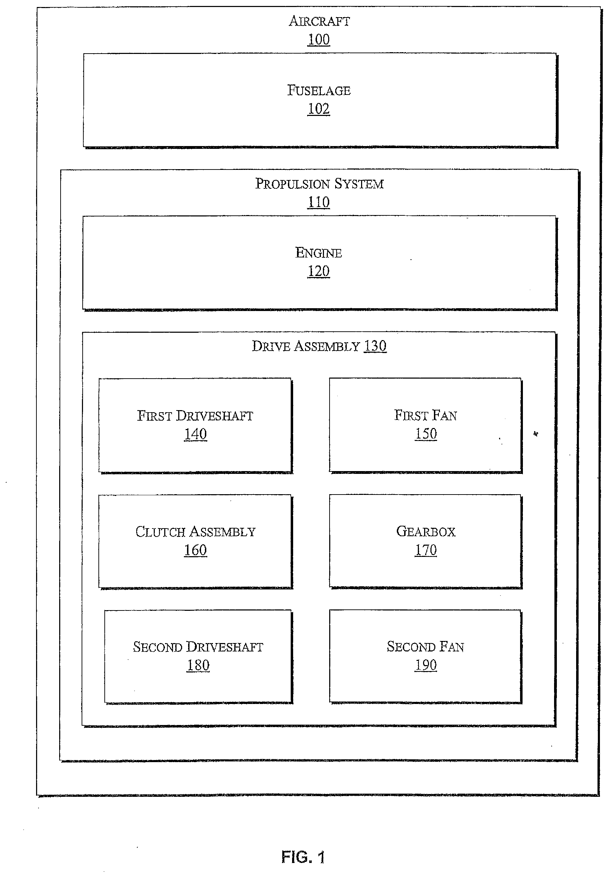

FIG. 1 is a schematic block diagram illustration of an aircraft comprising a contra-rotating open fan propulsion system, according to aspects. Referring to FIG. 1, an aircraft 100 comprises a fuselage 102 and a propulsion system 110. Propulsion system 110 comprises at least one engine 120 and drive assembly 130 coupled to the engine 120. The drive assembly 130 comprises a first driveshaft 140, a first fan 150, a clutch assembly 160, a gearbox 170, a second driveshaft 180, and a second fan 190. In operation the clutch assembly 160 enables the first fan 150 to be selectively engaged and disengaged from the first driveshaft 140. Specific examples of drive assemblies and propulsion systems will be described with reference to the following figures.

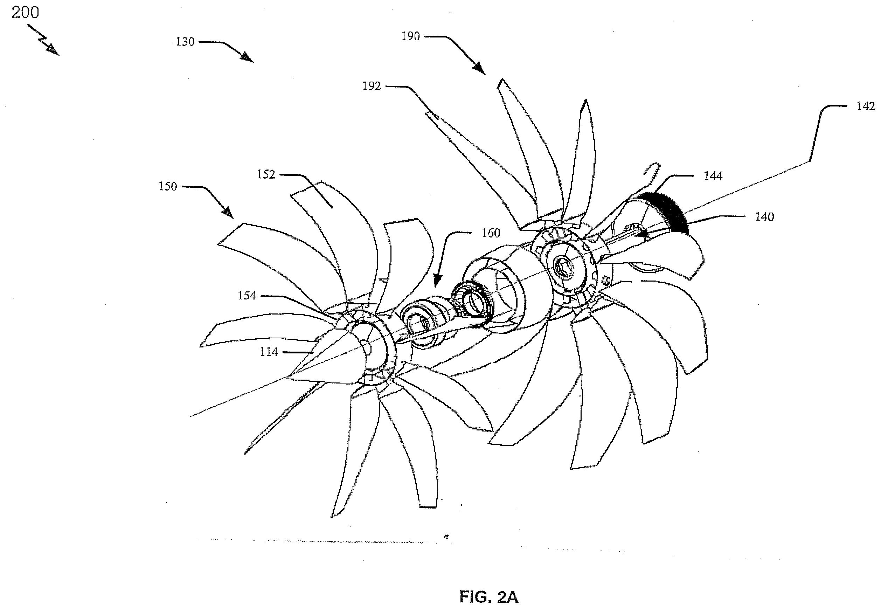

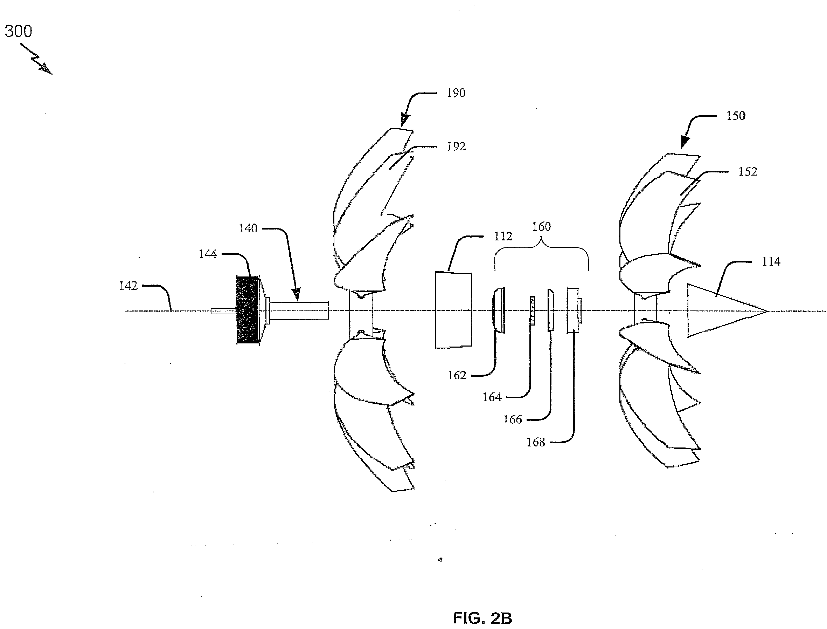

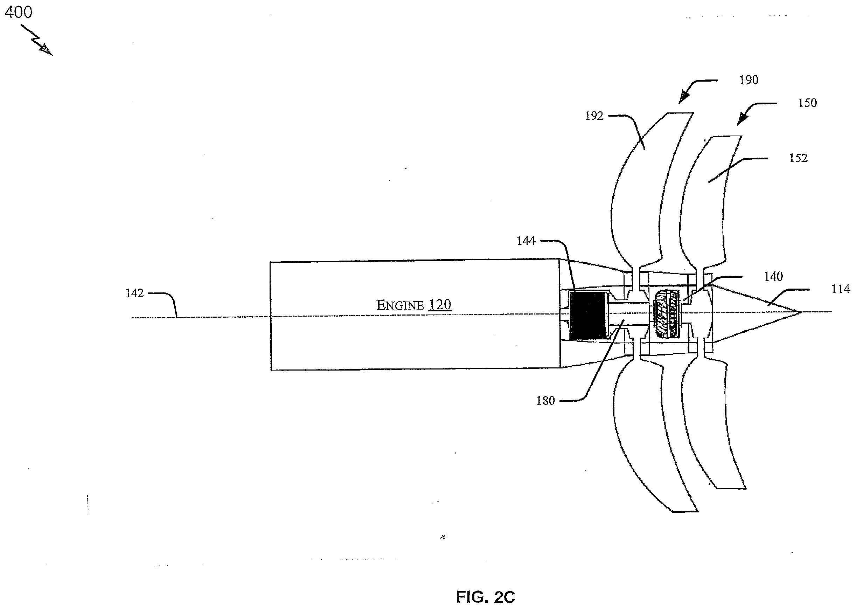

FIGS. 2A-2B are schematic illustrations 200, 300 of a drive assembly, and FIG. 2C is a schematic illustration 400 of a propulsion system according to a first aspect. Referring to FIGS. 2A-2C, in a first example a drive assembly 130 includes a first driveshaft 140 rotatable in a first direction about a first axis 142 and a second driveshaft 180 (see FIG. 2C) rotatable in a second direction about axis 142. Driveshafts 140, 180 may be coaxial, such that driveshaft 140 rotates within driveshaft 180. Driveshaft 180 is not shown in FIGS. 2A-2B.

Driveshaft 140, 180 may be coupled to a power source such as engine 120 (FIG. 2C) via a gearbox such as a planetary gearbox 144. Engine 120 and planetary gearbox 144 power the driveshafts 140, 180 to rotate the driveshafts 140, 180 about axis 142.

The specific construction of engine 120 is not critical. In some examples engine 120 may be implemented as a gas turbine engine comprising a multi-stage compressor which provides compressed air to a combustor, which turns turbines to rotate an output shaft. Engine 120 may also be comprised of an electric motor or an internal combustion engine of two or four stroke type. Driveshafts 140, 180 are coupled to the output shaft via planetary gearbox 144. The fan can be located in front or aft of the engine 120, allowing for the propulsor to push (i.e. a pusher engine configuration) or pull (i.e., a puller or tractor engine configuration) the engine 120 and subsequently the aircraft 100.

A first fan 150 is coupled to the first driveshaft 140 to rotate in a first direction about axis 142 when the first driveshaft 140 is rotated. First fan 150 may be positioned as the aft fan when the drive assembly 130 is coupled to engine 120. First fan 150 comprises a plurality of blades 152 coupled to a hub 154. In some examples the ratio of the diameter of rotor to that of the hub may be between 0.20 to 0.35. For many applications, the front rotor may have a diameter between 60 inches to 240 inches. Blades 152 may be curved or otherwise contoured to affect the power generation capability of the blades 152.

Further, a second fan 190 is coupled to a second driveshaft 180, visible in FIG. 2C, to rotate in a second direction, different from the first direction, about axis 142 when the second driveshaft 180 is rotated. Second fan 190 may be positioned as the forward fan when the drive assembly 130 is coupled to engine 120. Second fan 190 comprises a plurality of blades 192 coupled to a hub 194.

In some examples the second fan 190 and fan blades 192 may be designed to generate sufficient thrust at takeoff and climb-out while aft fan is not engaged with the driveshaft 140. This can be achieved by increasing the diameter of the second fan 190, as the net thrust generated by a fan is proportional to the fourth power of the fan diameter. For example, the thrust generated by fan 190 would be increased by as much as fifty percent (50%) if the diameter of fan 190 is increased by nineteen percent (19%). In some examples, blades 192 measure between about 101.6 cm and 508 cm (40 inches and 200 inches) in length and between about 10.2 cm and 88.9 cm (4 inches and 35 inches) in width. Blades 192 may be curved or otherwise contoured to affect the propulsive efficiency of the blades 192 at high speed. When assembled the first fan 150 and the second fan 190 are displaced along axis 142 by a distance that measures between 0.02 and 0.35 of the overall front row fan diameter. This distance is typically related to the activity factor of the blades and is determined either (1) experimentally, or (2) via unsteady computational fluid dynamics analysis.

A core duct 112 houses the clutch assembly 160 and an exhaust plug 114 is fitted adjacent the second fan 190.

A clutch assembly 160 is provided to selectively disengage the first fan 150 from the first driveshaft 140. In some examples, the clutch assembly 160 may be a fluid coupling system, or a friction (wet or dry) clutch system. In the example depicted in FIGS. 2A-2C clutch assembly 160 comprises an impeller 162, a stator 164, a turbine 166, and a casing 168. Impeller 162 may be coupled to driveshaft 140 such that impeller 162 rotates with driveshaft 140. Turbine 166 may be coupled to an output shaft which is, in turn, coupled to the hub 154 of first fan 150. Clutch assembly 160 may be filled with a fluid, typically an oil, to provide a fluid coupling between impeller 162 and turbine 166. Stator 164 functions to align the direction of fluid flowing from the turbine to the impeller.

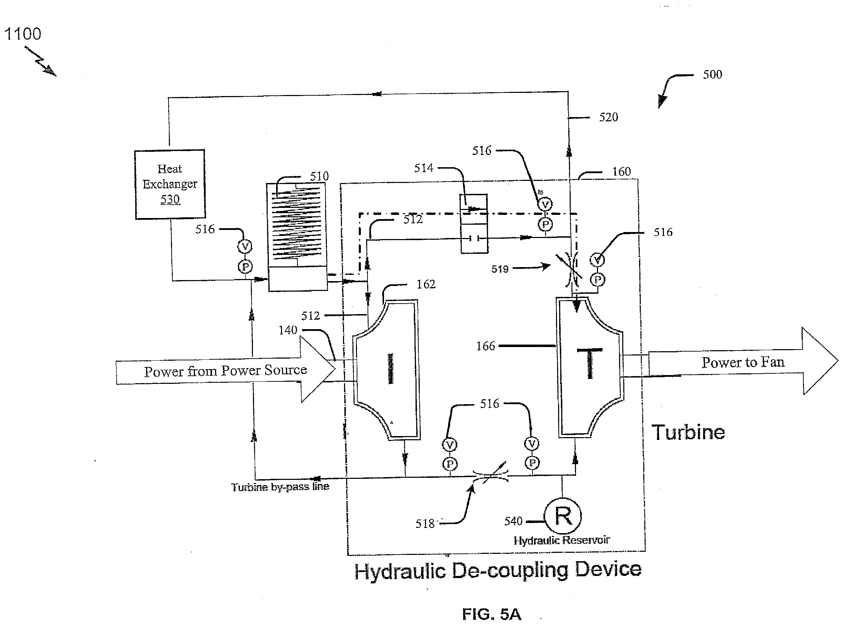

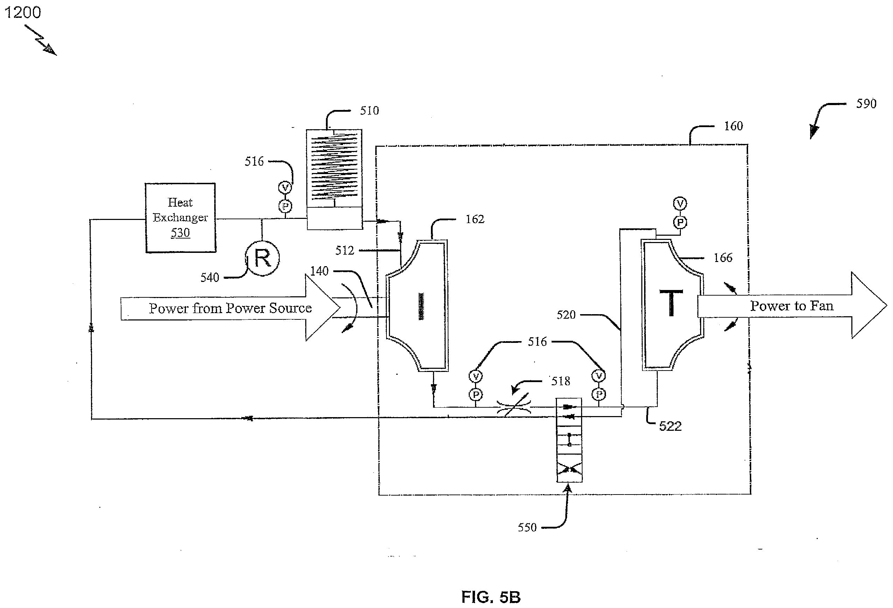

Clutch assembly 160 may be coupled to a hydraulic circuit system which increases or decreases the pressure of fluid in the clutch assembly 160 to increase or decrease, respectively, the amount of input power that is transmitted by the clutch assembly 160. Clutch assembly 160 also regulates the resistance applied to the turbine during the spin-down process to facilitate a more rapid change between the two modes of the device. Examples of hydraulic circuits are described below with reference to FIGS. 5A and 5B.

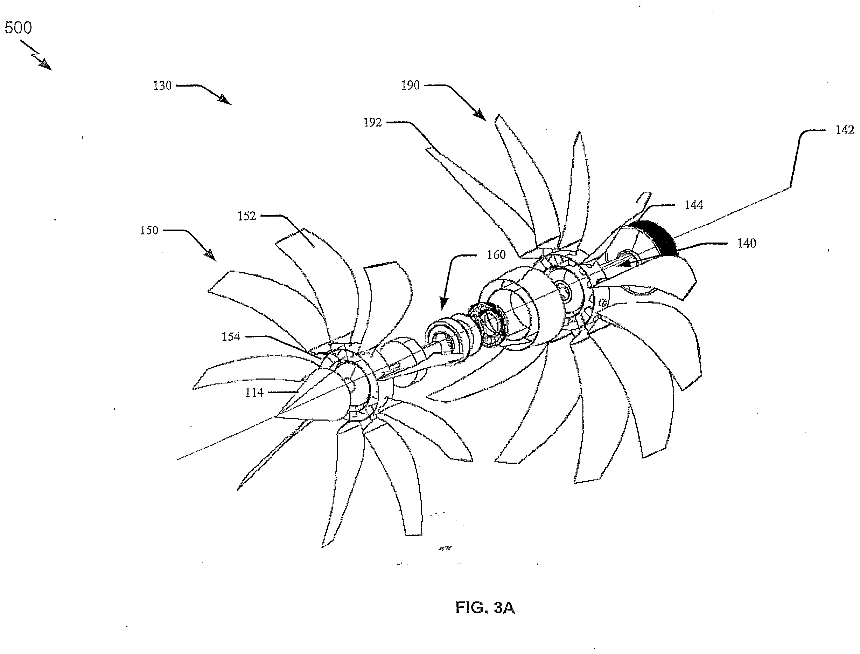

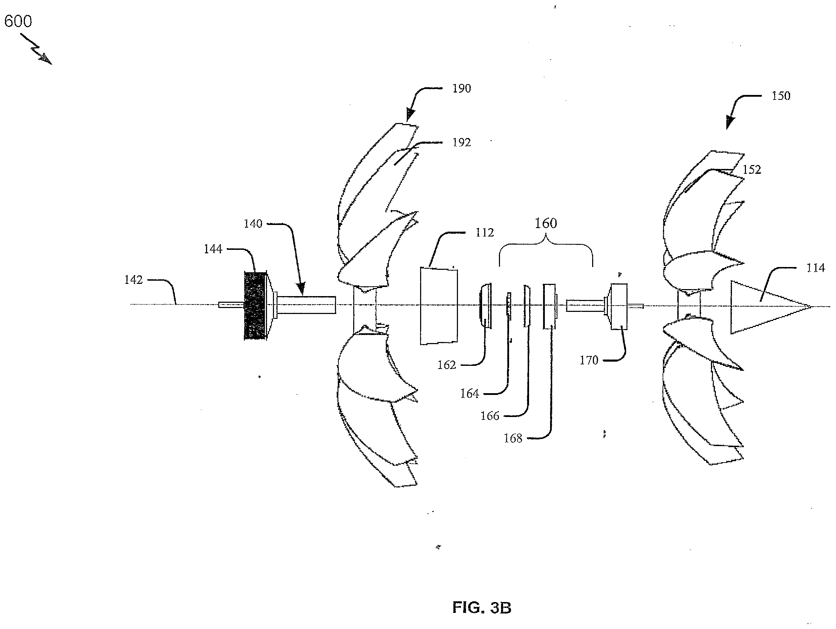

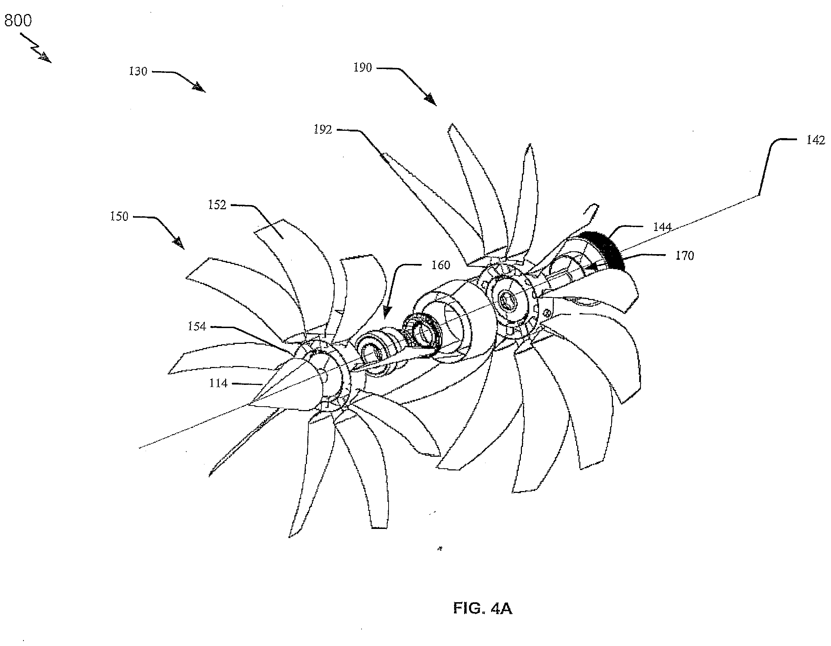

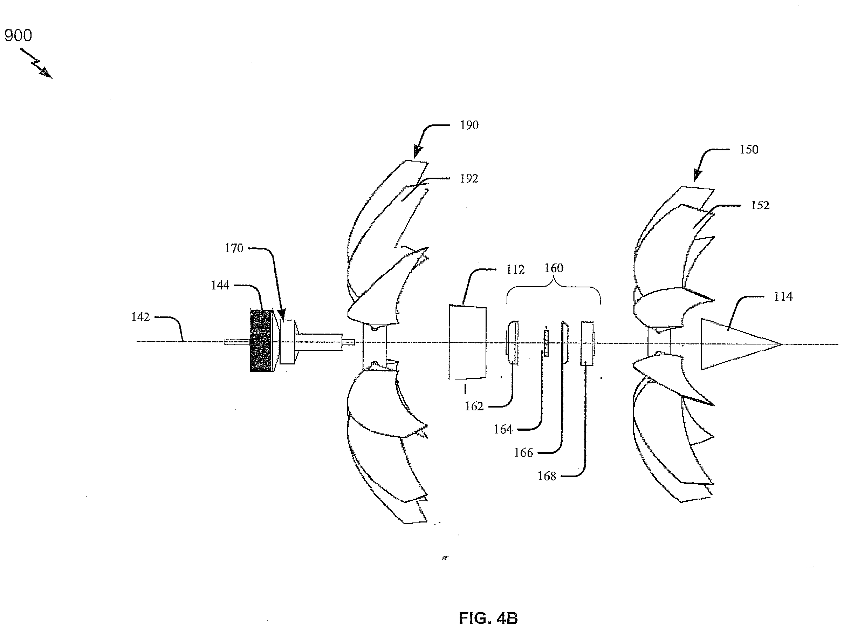

In the examples illustrated in FIGS. 2A-2C the first fan 150 is free to rotate passively (i.e., to windmill) with an adequate blade pitch angle under the influence of airflow from the second fan 190 after the first fan 150 is disengaged from the driveshaft 140. In the examples illustrated in FIGS. 3A-3C and 4A-4C a gearbox 170 is coupled to the first fan 150 to allow the first fan 150 to be driven in the same direction as the forward fan 190.

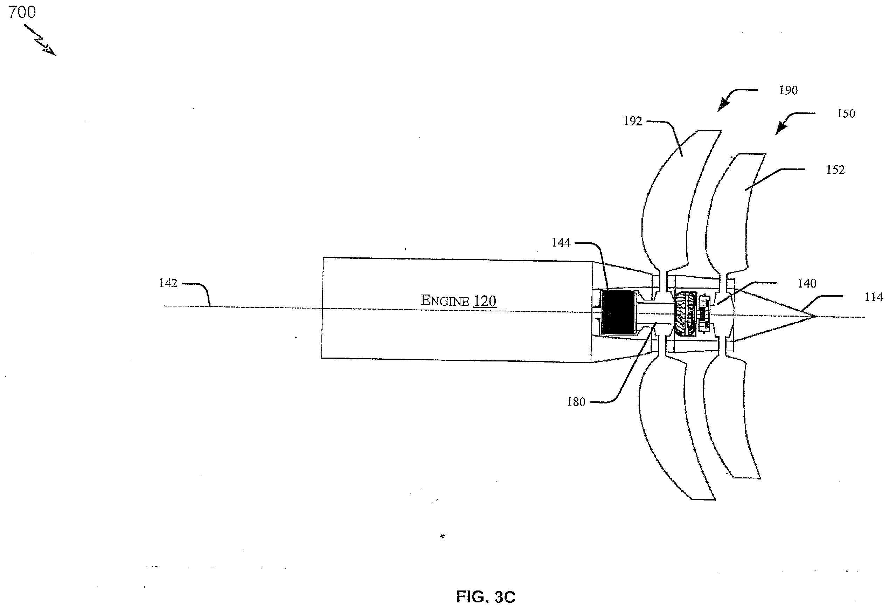

Referring first to the example illustrated FIGS. 3A-3C, FIGS. 3A-3B are schematic illustrations 500, 600 of a drive assembly, and FIG. 3C is a schematic illustration 700 of a propulsion system according to a second aspect. The output shaft of the clutch assembly 160 may be provided as an input to a gearbox 170. Gearbox 170 may be implemented as a reversible gearbox which selectively reverses the direction or rotation of the input shaft. Thus, in the example illustrated in FIGS. 3A-3C the clutch assembly 160 may be activated to disengage the first fan 150 from the driveshaft 140, and the first fan 150 may be allowed to spin down, assisted by the increased viscous resistance acting in the clutch assembly 160. Subsequently the direction of the output of reversing gearbox 170 may be changed and the clutch assembly 160 may be activated to reengage the second fan with the driveshaft to drive the first fan 150 in the opposite direction while the blades are pitched in the adequate orientation for wind milling, such that the second fan 190 rotates in the same direction as the first fan 150.

The remaining components illustrated in FIGS. 3A-3C are substantially the same as the corresponding components described with reference to FIGS. 2A-2C. In the interest of clarity, the description of these components will not be repeated.

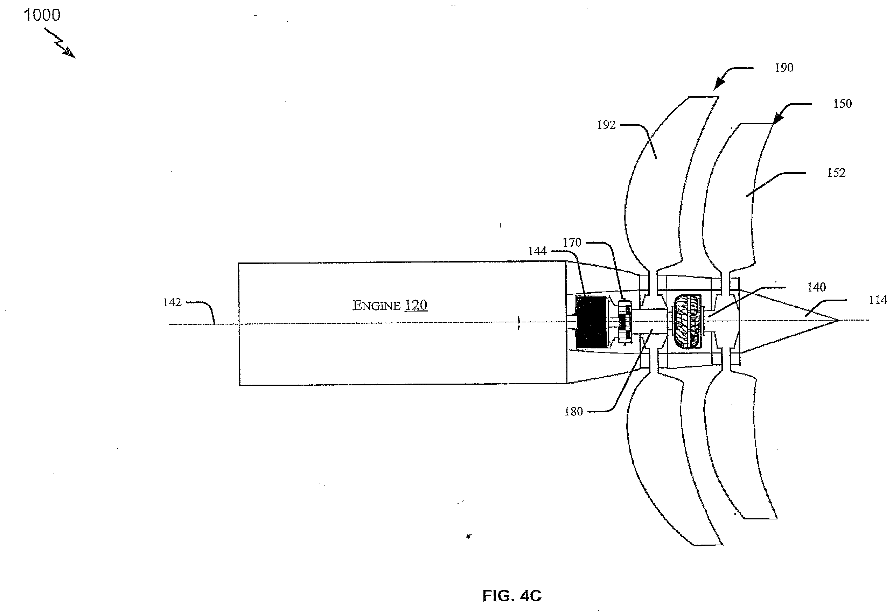

Referring next to the example illustrated in FIGS. 4A-4C, FIGS. 4A-4B are schematic illustrations 800, 900 of a drive assembly, and FIG. 4C is a schematic illustration 1000 of a propulsion system according to a third aspect. The output shaft of the planetary gearbox 144 may be provided as an input to a gearbox 170. Again, gearbox 170 may be implemented as a reversible gearbox which selectively reverses the direction or rotation of the input shaft. Thus, in the example illustrated in FIGS. 4A-4C the clutch assembly 160 may be activated to disengage the first fan 150 from the driveshaft 140, and the first fan 150 may be allowed to spin down and come to a full stop under the resistance induced in the clutch assembly 160. Subsequently the direction of the output of reversing gearbox 170 may be changed and the clutch assembly 160 may be activated to reengage the second fan with the driveshaft to drive the first fan 150 in the opposite direction, such that the first fan 150 rotates in the same direction as the second fan 190.

The remaining components illustrated in FIGS. 4A-4C are substantially the same as the corresponding components described with reference to FIGS. 2A-2C. In the interest of clarity, the description of these components will not be repeated.

FIGS. 5A and 5B are examples 1100, 1200 of hydraulic circuits which may be used to regulate the clutch assembly 160 to selectively couple and decouple the first fan 150 from the first driveshaft 140, or decelerate the first fan 150 according to aspects. Referring first to FIG. 5A, in a first example 1100 a hydraulic circuit 500 comprises a hydraulic accumulator 510 which maintains pressure on a hydraulic fluid. A first supply line 512 couples the hydraulic accumulator 510 to the impeller 162 and to a one-way valve 514 which is switchable between an open position in which hydraulic fluid can flow through the valve 514 and a closed position in which hydraulic fluid cannot flow through the valve 514.

A first variable flow rate valve 518 regulates the flow of hydraulic fluid between the impeller 162 and the turbine 166. Pressure and flow rate sensors 516 monitor the pressure and flow rate of hydraulic fluid on both sides of first variable flow rate valve 518.

Hydraulic fluid may exit the turbine 166 via line 520. A second variable flow rate valve 519 regulates the flow of hydraulic fluid from the turbine 166. Pressure and flow rate sensors 516 monitor the pressure and flow rate of hydraulic fluid exiting the turbine 166.

Hydraulic circuit 500 further includes a heat exchanger 530 to extract heat from the hydraulic fluid. A hydraulic fluid reservoir 540 is provided to store excess hydraulic fluid which overflows from the circuit 500. The excess hydraulic fluid stored in the hydraulic fluid reservoir 540 may be unpressurized.

In operation, power from the power source (e.g., the engine 120) is applied to the impeller 162 to rotate the impeller 162. When the valve 514 is closed such that hydraulic fluid cannot flow through valve 514, the hydraulic fluid flows to the impeller 162, which drives the turbine 166, such that the clutch assembly 160 engages the first fan 150 from the driveshaft 140.

To disengage the first fan 150 from the engine the first variable flow rate valve 518 is closed to reduce the flow of high pressure fluid from impeller 162 to turbine 166, thereby reducing the amount of power transmitted to the fan 150. When the amount of fluid passing through impeller 162 drops sufficiently power is no longer transmitted between impeller 162 and the turbine 166, thereby disengaging the fan 150 from the driveshaft 140.

To facilitate a faster spin down of the first fan 150, the one-way valve 514 may be switched to the open position, thereby allowing pressurized fluid stored in accumulator 510 to flow into the turbine 166 in a direction which is reversed from nominal operation of the turbine 166, illustrated by the dotted and dashed line in FIG. 5A. Under the pressure of the reversed flow, the internal resistance induced on turbine 166 will increase, therefore facilitating a more rapid spin-down of the first fan 150. The transient manner in which the reverse flow from accumulator 510 is applied can be managed via the first variable flow rate valve 518. The reverse flow could continue for such length of time as to allow the accumulator 510 to be fully depressurized and fluid in the circuit attaining ambient pressure. The length of time to depressurize the accumulator 510 depends on the maximum capacity of the accumulator 510, maximum allowable pressure in accumulator 510 and line 512, mass moment of inertia of the fan 150, the speed of rotation of the fan 150 at the moment when the first variable flow rate valve 518 was closed, aerodynamic resistance of the fan 150, and the efficiency of turbine 166. The design of the hydraulic system is driven by the maximum size and allowable pressure of the accumulator 510 and the desired length of time for fan 150 to reach a full stop. A practical value for the spin-down time may vary from 15 to 80 seconds, depending on operational considerations pertaining to aircraft 100.

FIG. 5B is a second example 1200 of a hydraulic circuit 590 to selectively couple and decouple the first fan 150 from the first driveshaft 140, according to aspects. Many components of the circuit 590 depicted in FIG. 5B are the same as the analogous components depicted in FIG. 5A, and in the interest of clarity these components will not be described in detail. Referring first to FIG. 5B, the circuit 590 includes a 3-way directional valve 550 coupled to lines 520 and 522 that is switchable between an open position in which hydraulic fluid can flow through lines 520 and 522, a closed position in which hydraulic fluid cannot flow through lines 520 and 522, and a switch position which lines 520 and 522 are switched at valve 550.

In operation, when the valve 550 is in the open position hydraulic fluid flows under pressure from hydraulic accumulator 510 into clutch assembly 160 and to impeller 162 via line 512. Impeller 162 drives the turbine 166, such that the clutch assembly 160 (e.g., hydraulic drive) engages the first fan 150 from the driveshaft 140.

When the valve 550 is in the closed position hydraulic fluid cannot flow between the impeller 162 and the turbine 166, thereby disengaging the fan 150 from the driveshaft 140.

When the valve 550 is in the switch position hydraulic fluid flows under pressure from the impeller 162 through line 520 into turbine 166 in a reverse direction, effectively acting as a brake on turbine 166, to facilitate a more rapid spin-down of fan 150.

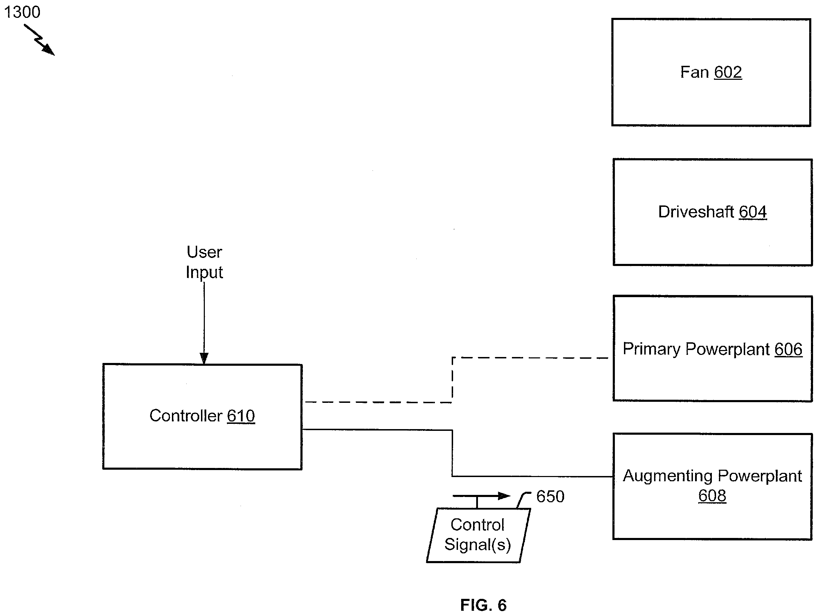

FIG. 6 illustrates an example of a propulsion system 1300 that includes an augmenting powerplant 608. The propulsion system 1300 is configured for use on an aircraft as described further herein. The augmenting powerplant 608 may provide power to the aircraft during certain flight stages (e.g., takeoff) and may not provide power to the aircraft during other flight stages (e.g., cruise). As illustrative, non-limiting examples, the flight stages may include takeoff, climb, cruise, hold, descent, landing, and go-around (e.g., aborted landing). The propulsion system 1300 includes a fan 602, a driveshaft 604 a primary powerplant 606, the augmenting powerplant 608, and a controller 610. The propulsion system 1300 may enable the primary powerplant 606 to be optimized for a particular flight stage (e.g., a cruise flight stage) of the aircraft. The propulsion system 1300 or the primary powerplant 606 may include or correspond to the propulsion system 110 of FIG. 1. The augmenting powerplant 608 may include or correspond to the clutch assembly 160 of FIGS. 1, 5A, and 5B.

The fan 602 is coupled to the primary powerplant 606 via the driveshaft 604. The fan 602 may be located in front of or behind the primary powerplant 606, allowing for the propulsion system 1300 to push (i.e. a pusher engine configuration) or pull (i.e., a puller or tractor engine configuration) the aircraft. In some implementations, the fan 602 is ducted. As an illustrative, non-limiting example, the fan 602 may be ducted and the fan 602, the driveshaft 604, and the primary powerplant 606 may be included in a turbofan engine. In other implementations, the fan 602 may be or open (e.g., unducted). As an illustrative, non-limiting example, the fan 602, the driveshaft 604, and the primary powerplant 606 may be included in a propfan engine, which may also be referred to as an open rotor engine.

The fan 602 is coupled to a driveshaft 604 and rotates in a first direction about an axis of the driveshaft 604 when the driveshaft 604 is rotated. In some implementations, the fan 602 is disengaged or decoupled from the driveshaft 604 via a clutch, such as the clutch assembly 160 of FIG. 1. The fan 602 includes a plurality of blades coupled to a hub. The blades may be curved or otherwise contoured to affect the power generation capability of the blades, such as to reduce wave drag. In some implementations, the propulsion system 1300 includes multiple fans (e.g., a multiple stage fan). The multiple fans may have different placement in relation to the primary powerplant 606 or may rotate in a second direction, such as a contra-rotating fan, or both.

The primary powerplant 606 is coupled to the driveshaft 604 and the fan 602. The primary powerplant 606 is configured to rotate the driveshaft 604 to power the fan 602 during all flight stages. The primary powerplant 606 may include or correspond to a gas turbine engine, an electric engine, or a hybrid engine (e.g., a gas and electric engine). In some implementations, the primary powerplant 606 is designed and optimized for a particular flight stage (e.g., a cruise flight stage). For example, the primary powerplant 606 is sized to maximize fuel efficiency during a cruise flight stage (e.g., cruise operating conditions) and therefore produces insufficient thrust to meet a particular thrust-based operating condition, such as engine inoperative climb or takeoff length thrust. Additionally or alternatively, the thrust-based operating condition may be associated with a particular airport, a takeoff temperature, a takeoff air density, a takeoff altitude, a speed at which liftoff occurs, a maximum altitude, or a maximum air speed. In a particular implementation regarding a 737 aircraft, each primary powerplant 606 is selected to have a maximum thrust output that will not exceed a predetermined single engine thrust-to-weight ratio of 4.15, such that each primary powerplant 606 operating by itself is not sufficient (in size) to produce the minimum thrust output required for the aircraft to achieve takeoff. In other implementations, the primary powerplant 606 may fail to meet a desired or designed thrust based operating condition during testing. In some implementations, the primary powerplant 606 is coupled to the driveshaft 604 via a gearbox or one or more gears. In such implementations, the primary powerplant 606 includes or correspond to a geared turbofan engine.

In some implementations, the propulsion system 1300 includes a starter motor (not shown) configured to start (e.g., turn over) the primary powerplant. The starter motor includes or corresponds to a hydraulic motor, a pneumatic motor, or an electric motor. The starter motor provides power to the driveshaft 604 and to the fan 602 until the primary powerplant 606 can compress enough air to sustain combustion. The starter motor provides power to the driveshaft 604 and the fan 602 before the first flight stage. The starter motor does not provide power to the driveshaft 604 or the fan 602 during any flight stage. In some implementations, the starter motor is disengaged from the driveshaft 604 during the flight stages. Additionally or alternatively, the starter motor acts as a generator during the flight stages. For example, the primary powerplant 606 rotates the driveshaft 604 and the fan 602 during flight. The driveshaft 604 rotates the starter motor causes the starter motor to generate electricity. The starter motor may be coupled to an auxiliary power unit (APU) or an accumulator. The APU or the accumulator may provide energy to the starter motor to start the primary powerplant 606. In a particular implementation, the APU may function as the starter motor. For example, the APU generates hot pressurized air and the hot pressurized is used to start the primary powerplant 606. The hot pressurized air generated by the APU may provide power to the driveshaft 604 and the fan 602 before the first flight stage. The APU does not provide power to the driveshaft 604 or the fan 602 during any flight stage.

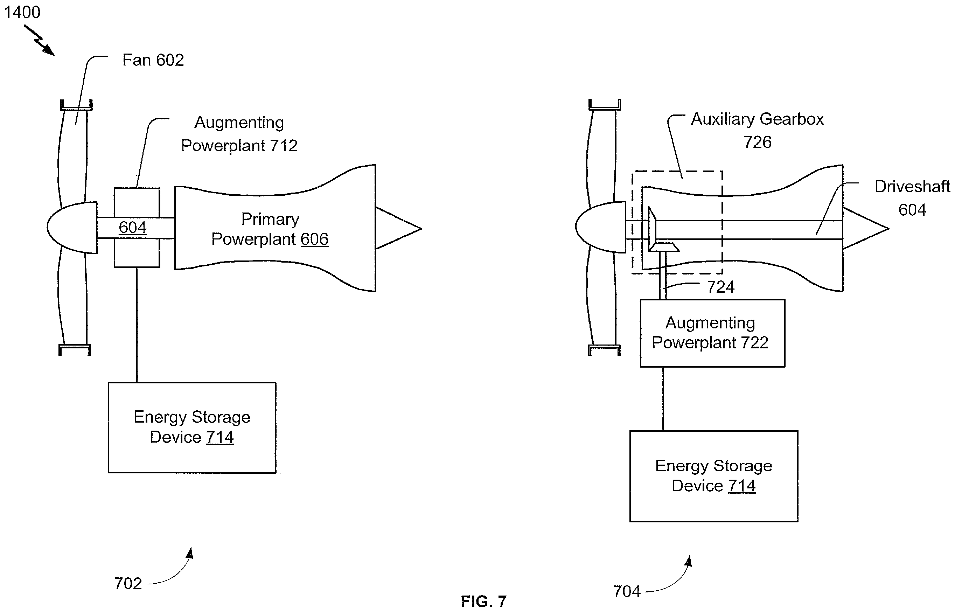

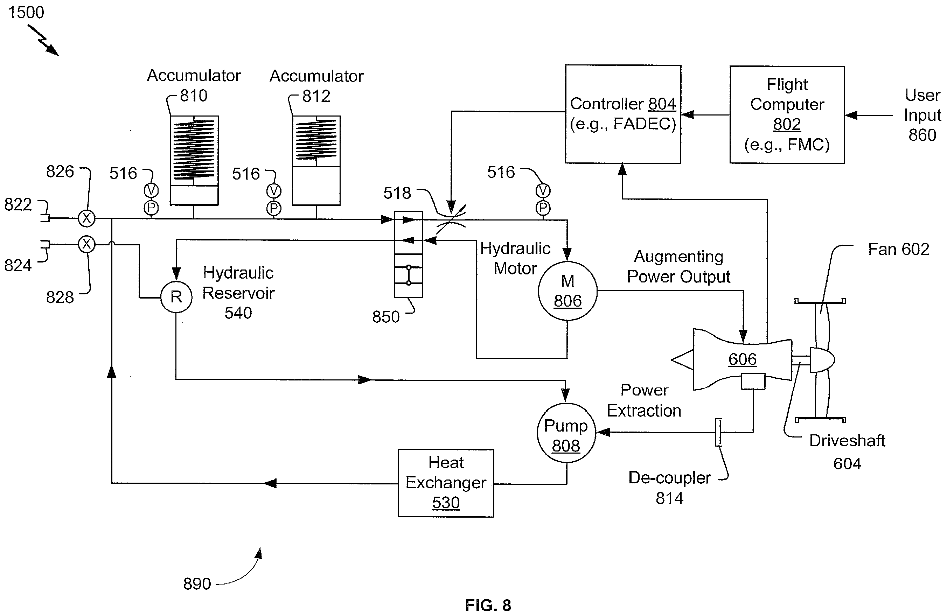

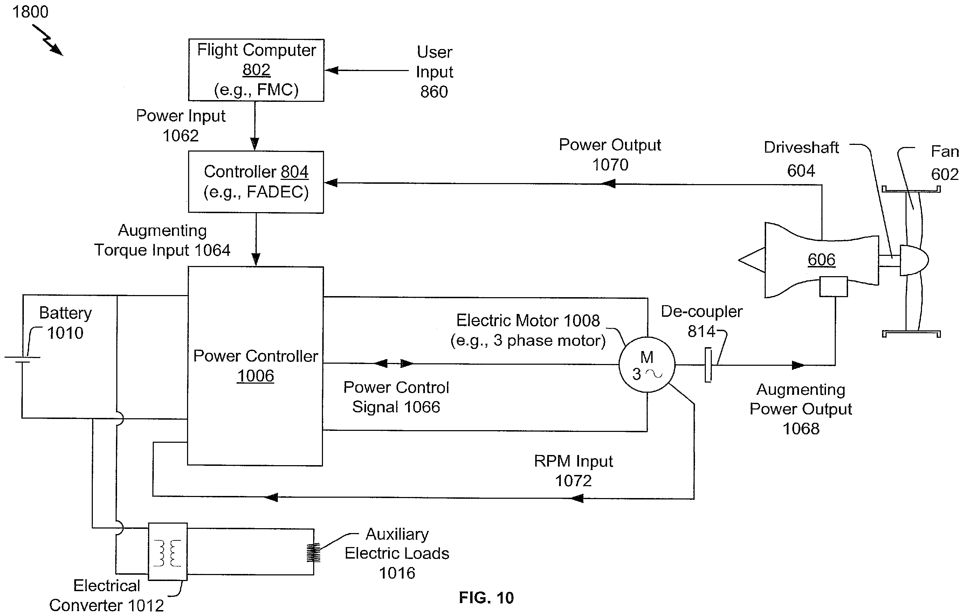

The augmenting powerplant 608 is coupleable with the driveshaft 604 and the fan 602. The augmenting powerplant 608 may be coupled to the driveshaft 604 and the fan 602 in series with the primary powerplant 606 or in parallel with the primary powerplant 606, as further described with reference to FIG. 7. The augmenting powerplant 608 is configured to rotate the driveshaft 604 to power the fan 602 in a first flight stage (e.g., a takeoff flight stage). In the illustrated embodiment, the augmenting powerplant 608 provides power to the fan 602 (e.g., rotates the driveshaft 604) during the takeoff flight stage, the climb flight stage, the go-around flight stage, or a combination thereof. The augmenting powerplant 608 is configured to disengage (or partially disengage) from the driveshaft 604 and the fan 602 in a second flight stage (e.g., a cruise flight stage) via a clutch, such as the clutch assembly 160 of FIG. 1. The second flight stage may include or correspond to the cruise flight stage, a secondary climb flight stage, a descent flight stage, a hold flight stage or a combination thereof. Additionally or alternatively, the augmenting powerplant 608 may remain coupled to the driveshaft 604 during the second flight stage and may generate electricity or pressure (e.g., hydraulic pressure or pneumatic pressure) during the second flight stage by extracting energy from the driveshaft 604, as described further with reference to FIGS. 8 and 10.

The augmenting powerplant 608 includes or corresponds to a hydraulic motor, a pneumatic motor, an electric motor, or a combination thereof. The augmenting powerplant 608 is coupled to an energy storage device. The energy storage device is configured to provide energy to the augmenting powerplant 608 to cause the augmenting powerplant 608 to rotate the driveshaft 604. In implementations where the augmenting powerplant 608 includes or corresponds to the hydraulic motor or the pneumatic motor, the energy storage device includes an accumulator, such as the accumulator 510 of FIGS. 5A and 5B. In implementations where the augmenting powerplant 608 includes or corresponds to the electric motor, the energy storage device includes a battery. The battery may include or correspond to a chemical current reservoir or an electro-static current reservoir (e.g., a supercapacitor), as further described with reference to FIG. 10.

The controller 610 is coupled to the augmenting powerplant 608. The controller 610 is configured to control operation of the augmenting powerplant 608 during the flight stages. For example, during the first flight stage, the controller 610 is configured to cause the augmenting powerplant 608 to drive the fan 602, and to cause the augmenting powerplant 608 to cease driving the fan 602 based on an indication of a transition from the first flight stage to the second flight stage. To illustrate, the controller 610 may transmit one or more control signals 650 to the augmenting powerplant 608. As an illustrative, non-limiting example, the controller 610 may transmit first control signals to cause the augmenting powerplant 608 to rotate the driveshaft 604 and drive the fan 602 and second control signals to cause the augmenting powerplant 608 to cease rotating the driveshaft 604 and driving the fan 602.

The controller 610 may be configured to receive or detect an indication (e.g., a flight stage indication) or to determine a flight stage based on one or more parameters. The controller 610 may be coupled to a flight computer (e.g., a flight management computer (FMC)) and may receive the indication or the one or more parameters from the flight computer. Additionally or alternatively, the controller 610 may be coupled to a user input device (e.g., an aircraft throttle control, such as a thrust lever) and may receive a user input via the user input device. As illustrative, non-limiting examples, an indication may be generated by or detected in response to moving a thrust lever from takeoff thrust setting to a lower thrust setting, an altimeter output (e.g., an altitude above ground) exceeding a threshold, a rate-of-climb decreasing below a threshold, etc.

In some implementations, the controller 610 is coupled to the primary powerplant 606. The controller 610 may be further configured to adjust a power output (e.g., a thrust setting) of the primary powerplant 606 responsive to the user input, feedback (e.g., parameters from the primary powerplant), or input from the flight computer, as further described with reference to FIGS. 8 and 10. The controller 610 may include or correspond to a full authority digital engine control (FADEC), such as an electronic engine controller (EEC), an engine control unit (ECU), a power controller, or a combination thereof.

Prior to operation, the energy storage device (e.g., the battery or the accumulator) may be charged by an off-board system. Alternatively, the energy storage device (e.g., the battery or the accumulator) may be charged by an onboard system, such as the APU. The battery or the accumulator stores energy to power the augmenting powerplant 608. After the battery or the accumulator is charged, the starter motor is activated to start the primary powerplant 606. After the primary powerplant 606 is started and stabilizes (e.g., idles), the starter motor is deactivated. Additionally or alternatively, the primary powerplant 606 may charge the battery or the accumulator. For example, the primary powerplant 606 while idling may rotate the driveshaft 604, and rotation of the driveshaft 604 may cause the starter motor or the augmenting powerplant 608 to charge the battery or the accumulator.

During operation of the aircraft, the controller 610 receives a user input indicating a takeoff flight stage (e.g., the first flight stage) or a thrust setting associated with the takeoff flight stage. The controller 610 generates and transmits the one or more control signals 650 (e.g., the first control signals) to the augmenting powerplant 608 to cause the augmenting powerplant 608 to rotate the driveshaft 604 to drive the fan 602. During the takeoff flight stage, a climb flight stage, or both, the augmenting powerplant 608 and the primary powerplant 606 rotate the driveshaft 604 to rotate the fan 602. The battery or the accumulator provide the energy to the augmenting powerplant 608 to generate torque to rotate the driveshaft 604.

After the aircraft completes the takeoff flight stage, the climb flight stage, or both, the controller 610 receives a second indication or determines that the aircraft is transitioning to the second flight stage (e.g., the cruise flight stage). In response to detecting the transition to the cruise flight stage, the controller 610 transmits the one or more control signals 650 (e.g., the second control signals) to the augmenting powerplant 608 to cause the augmenting powerplant 608 to cease driving the fan 602. Thus, during the cruise flight stage only the primary powerplant 606 drives the fan 602.

Additionally, the augmenting powerplant 608 may be activated during the go-around flight stage (e.g., an aborted landing). To illustrate, a user may activate a Take-off/Go-Around (TO/GA) switch to indicate maximum available power. The controller 610 may receive an indication for maximum available power and may transmit the one or more control signals 650 to the augmenting powerplant 608 to cause the augmenting powerplant 608 (along with the primary powerplant 606) to rotate the driveshaft 604 and the fan 602.

In some implementations, the battery or the accumulator is charged (e.g., recharged) during flight, such as during the cruise flight stage. For example, rotation of the driveshaft 604 causes the augmenting powerplant 608 to recharge the battery or the accumulator, as described with reference to FIGS. 8 and 10.

An aircraft with an augmenting powerplant has increased efficiency (e.g., specific fuel consumption) during a cruise flight stage as compared to an aircraft without an augmenting powerplant. To illustrate, the augmenting powerplant provides additional power during certain flight stages (e.g., takeoff) to meet FAR and allows the primary powerplant to be optimized for other flight stages (e.g., cruise). As the cruise flight stage is often the longest flight stage (and consumes the most fuel), an increase in efficiency (e.g., specific fuel consumption) during the cruise flight stage reduces overall fuel consumption and aircraft operating costs. Additionally, the increase in efficiency also lowers aircraft emissions as compared to conventional powerplants (e.g., powerplants designed to meet FAR). Furthermore, as the primary powerplant is designed to output less thrust than a conventional powerplant, the primary powerplant may be smaller and may weigh less than the conventional powerplant, resulting in less drag and reduced costs. An augmenting powerplant may be used to supplement an aircraft to meet a thrust-based condition. For example, if a primary powerplant, during testing, fails to meet a designed thrust output or the designed thrust output is changed, an augmenting powerplant can be used to provide supplemental thrust to satisfy the thrust output (e.g., the thrust-based condition). In such cases, adding the augmenting powerplant to the aircraft is more cost effective and quicker than redesigning the primary powerplant.

FIG. 7 is a diagram 1400 that illustrates an example of configurations of a propulsion system that includes an augmenting powerplant and a primary powerplant. The propulsion system may include or correspond to the propulsion system 1300 of FIG. 6. The diagram 1400 includes examples of two configurations, a series configuration 702 and a parallel configuration 704.

Referring to the series configuration 702, the propulsion system includes the fan 602, the driveshaft 604, and the primary powerplant 606. The propulsion system includes an augmenting powerplant 712 coupled to or coupleable with the driveshaft 604 and positioned between the fan 602 and the primary powerplant 606. In the series configuration 702, the augmenting powerplant 712 and the primary powerplant 606 are coupled to the driveshaft 604 in series (e.g., coaxially). The augmenting powerplant 712 may be coupled to the driveshaft 604 via one or more gears, a clutch, or a combination thereof. The augmenting powerplant 712 receives energy to rotate the driveshaft 604 from an energy storage device 714.

Referring to the parallel configuration 704, the propulsion system includes the fan 602, the driveshaft 604, and the primary powerplant 606. The propulsion system includes an augmenting powerplant 722 coupled to the driveshaft 604 via an auxiliary driveshaft 724 and an auxiliary gearbox 726. In the parallel configuration 704, the augmenting powerplant 722 is not coupled to the driveshaft 604 coaxially with the primary powerplant 606. The augmenting powerplant 722 receives energy to rotate the driveshaft 604 from the energy storage device 714. As illustrated in FIG. 7, the augmenting powerplant 722 and the primary powerplant 606 are coupled to the driveshaft 604 in parallel.

As compared to the parallel configuration 704, the series configuration 702 may increase efficiency of the propulsion system. For example, the series configuration 702 reduces losses involved in power transmission (e.g., eliminates mechanical losses resulting from transferring the power generated from the augmenting powerplant 722 through the auxiliary driveshaft 724 and the auxiliary gearbox 726 to the driveshaft 604). Additionally, the series configuration 702 may be lighter than the parallel configuration 704 as the series configuration 702 does not include a dedicated auxiliary gearbox or transmission system (e.g., the auxiliary driveshaft 724). However, the parallel configuration 704 may reduce maintenance costs by allowing easier access to the powerplants for inspection and maintenance as compared to the series configuration 702. The parallel configuration 704 may be more flexible and may be easier to spatially integrate into a propulsion system than the series configuration 702. Because a parallel configuration may have the augmenting powerplant 722 separate from the primary powerplant 606, the primary powerplant 606 may be shorter.

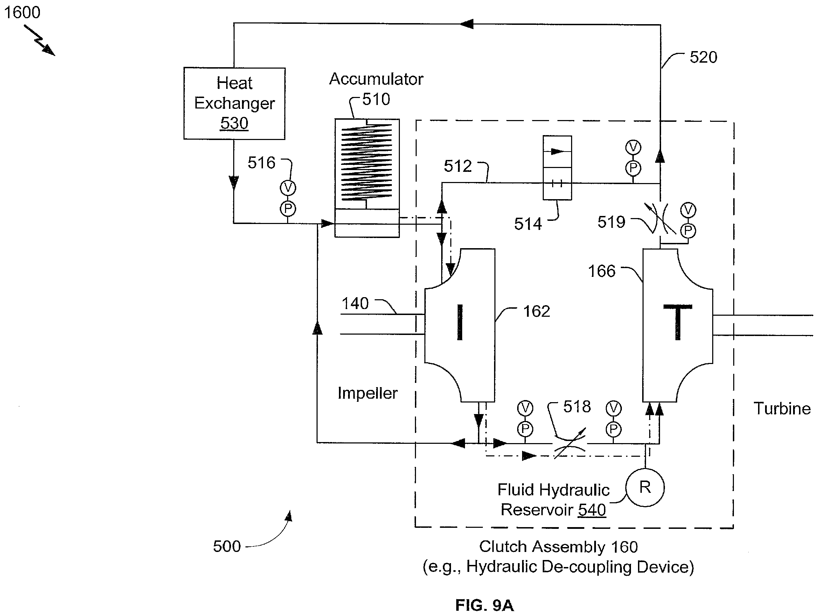

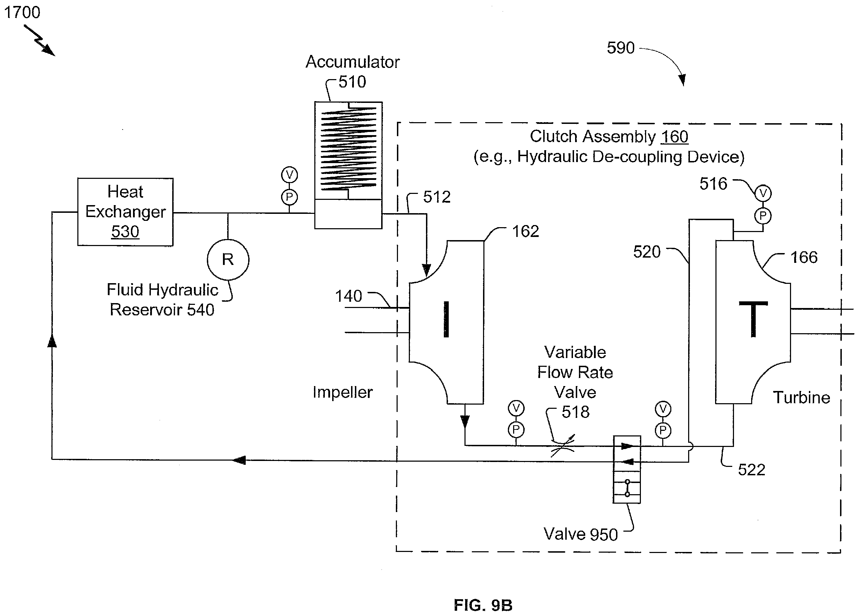

FIGS. 8, 9A, and 9B are examples of fluid-powered augmenting powerplants. The fluid may include or correspond to a compressible fluid (e.g., a gas) or an incompressible fluid (e.g., a liquid). As illustrative, non-limiting examples, the fluid may include hydraulic fluid or air. As illustrated in FIGS. 8, 9A, and 9B, the fluid-powered augmenting powerplant is a hydraulic motor and is part of a hydraulic circuit. In other implementations, pneumatic-powered augmenting powerplants (e.g., a pneumatic motor) and pneumatic circuits may be used.

Referring to FIG. 8, a diagram illustrates an example configuration of a propulsion system 1500 that includes a hydraulic augmenting powerplant. The propulsion system 1500 may include or correspond to the propulsion system 1300 of FIG. 6. The propulsion system 1500 includes a flight computer 802, a controller 804, the fan 602, the driveshaft 604, the primary powerplant 606, an augmenting powerplant (e.g., a hydraulic motor 806 and one or more accumulators), and a hydraulic circuit 890.

The flight computer 802 (e.g., a flight management computer (FMC)) is coupled to one or more input devices and is configured to generate a power (e.g., thrust) setting based on received inputs, such as a user input 860. For example, in one embodiment, the flight computer 802 receives a thrust level or throttle setting, an engine rating (e.g., a de-rate level), an output shaft revolutions per minute (RPM), a primary powerplant temperature (e.g., core turbine inlet temperature), ambient temperature, a static pressure, and a humidity. The flight computer 802 then determines the power setting based on the received inputs.

The controller 804 (e.g., a FADEC) is coupled to the flight computer 802, the one or more user input devices, or a combination thereof. The controller 804 is configured to receive the inputs or the power setting from the flight computer 802 and to receive feedback (e.g., feedback signals) from the primary powerplant 606, the augmenting powerplant 608, or both. The controller 804 then adjusts the thrust generated by the primary powerplant 606, the augmenting powerplant 608, or both, based on the received inputs, the power setting, the feedback signals, or a combination thereof. As illustrative, non-limiting examples, the controller 804 is configured to adjust fuel flow into the primary powerplant 606, to adjust a flow of hydraulic fluid into the hydraulic motor 806, or both. In some implementations, the controller 804 is separate from a FADEC for the primary powerplant 606. The controller 804 may include or correspond to the controller 610 of FIG. 6.

The propulsion system 1500 may include the one or more accumulators. As illustrated in FIG. 8, the one or more accumulators include a first accumulator 810 (e.g., a high pressure accumulator) and second accumulator 812 (e.g., a low pressure accumulator). The one or more accumulators are configured to store energy (e.g., maintaining pressure on a pressurized fluid) to power the hydraulic motor 806.

The hydraulic circuit 890 includes a charge port 822 and a drain port 824 to enable the one or more accumulators to be charged by an off-board system. The hydraulic circuit 890 includes one or more valves configured to control activation of the hydraulic motor 806, a thrust setting of the hydraulic motor 806, or both. As illustrated in FIG. 8, the hydraulic circuit 890 includes the first variable flow rate valve 518 and a two-position valve 850. The first variable flow rate valve 518 is controllable or adjustable by the controller 804 to cause the torque output by the hydraulic motor 806 to increase or decrease. The two-position valve 850 enables charging of the one or more accumulators or activation of the hydraulic motor 806. The hydraulic circuit 890 also includes the one or more pressure and flow rate sensors 516, the heat exchanger 530, and the hydraulic fluid reservoir 540, as described with reference to FIGS. 5A and 5B. The hydraulic circuit 890 further includes a charge port valve 826 and a drain port valve 828. The charge port valve 826 is configured to enable the addition of pressurized hydraulic fluid. The drain port valve 828 is configured to enable drainage of the hydraulic fluid for maintenance of the propulsion system 1500 and removal of the hydraulic fluid. Additionally, the drain port valve 828 may enable unpressurized hydraulic fluid to be added to the hydraulic fluid reservoir 540 or may enable replacement of hydraulic fluid stored in the hydraulic fluid reservoir 540. Components of the hydraulic circuit 890 may be in flow communication with each other such that hydraulic fluid may flow from one component to another component.

In the illustrated embodiment, the propulsion system 1500 and the hydraulic circuit 890 also includes a pump 808. The pump 808 is configured to generate pressure to charge (or recharge) the one or more accumulators. The pump 808 also generates pressure to move the hydraulic fluid through the hydraulic circuit 890. As an illustrative, non-limiting example, the pump 808 is a hydraulic pump, such as a geared pump, a rotary vane pump, a screw pump, a centrifugal pump, a piston pump, etc.

In some implementations, the propulsion system 1500 includes a de-coupler 814. The de-coupler 814 is configured to decouple the augmenting powerplant (e.g., the motor and pump) from the driveshaft 604 and the fan 602. In the exemplary embodiment, the de-coupler 814 is implemented as a clutch, such as the clutch assembly 160 of FIG. 1.

Prior to operation, the valve 850 and the first variable flow rate valve 518 are closed in response to receiving a control signal from the controller 804. The charge port 822 and the drain port 824 are coupled to an off-board hydraulic charging device. The off-board charging device pumps in hydraulic fluid causing the pressure in the hydraulic circuit 890 to increase and the one or more accumulators to be charged. After the one or more accumulators are charged, the off-board charging device is decoupled from the charge port 822 and the drain port 824.

During operation, the flight computer 802 receives the user input 860 from a user (e.g., a pilot) regarding takeoff conditions. The flight computer 802 generates a power input based on the takeoff conditions and transmits the power input to the controller 804. The controller 804 calculates an amount of augmenting torque to be output by the augmenting powerplant (e.g., the hydraulic motor 806) based on the power input. The controller 804 may transmit a control signal to the valve 850, the first variable flow rate valve 518, or both. The control signal may cause the valve 850 to switch to the open position, may set or adjust a flow rate of the first variable flow rate valve 518, or both. The controller 804 may set or adjust the control signal based on the augmenting torque.

The hydraulic motor 806 rotates the driveshaft 604 responsive to the power signal. The hydraulic motor 806 rotates the driveshaft 604 during the first flight stage. The flight computer 802 may receive a second input from the user. The second input may be associated with a transition from a first flight stage to a second flight stage. For example, the second input may be associated with a cruising speed (or an amount of thrust corresponding to a cruising speed). The flight computer 802 generates and transmits a second power input to the controller 804. The controller 804 determines (or calculates) a second amount of augmenting torque to be output by the augmenting powerplant (e.g., the hydraulic motor 806) based on the second power input. The controller 804 may transmit a second control signal to the valve 850, to the first variable flow rate valve 518, or both.

Additionally or alternatively, the controller 804 may be configured to adjust an amount of augmenting torque based on feedback (e.g., a power output) from the propulsion system 1500. For example, the controller 804 may estimate an amount of augmenting torque and may increase or decrease the estimated amount of augmenting torque based on the power output by the primary powerplant 606 by adjusting the first variable flow rate valve 518. Adjusting the first variable flow rate valve 518 regulates the amount of hydraulic fluid that flows from the one or more accumulators to the hydraulic motor 806.

Additionally or alternatively, the pump 808 may charge the one or more accumulators during flight (e.g., during the second flight stage, such as the cruise flight stage). By charging the one or more accumulators during flight, the one or more accumulators may store a charge for takeoff only and thus, fewer or smaller accumulators may be used. Accordingly, weight of the aircraft may decrease. By not charging the one or more accumulators during flight, a cooling system (e.g., the heat exchanger 530) may be used to cool the hydraulic fluid while charging may be reduced. Also, fuel efficiency may increase as the pump 808 will not be siphoning power (or siphoning less power) from the primary powerplant 606 and the driveshaft 604 to charge the one or more accumulators.

As compared to other types of augmenting power storage methods, hydraulic accumulators may have a higher energy density. To illustrate, an accumulator may be sized to store more energy per unit volume than a battery, and thus the hydraulic motor 806 may be able to operate and provide thrust for a longer period of time between charges. As illustrated in FIG. 8, the augmenting powerplant (e.g., the hydraulic motor 806) is separate from a clutch assembly of the primary powerplant 606. By having the augmenting powerplant arranged in parallel with the primary powerplant 606 as shown in FIG. 7, the augmenting powerplant may be sized to provide more torque than if the augmenting powerplant is arranged in series with the primary powerplant 606 also as shown in FIG. 7.

FIGS. 9A and 9B are examples of propulsion systems that include hydraulic circuits which may be used to regulate the clutch assembly 160 (e.g., the augmenting powerplant) to selectively provide power to rotate a driveshaft, such as the driveshaft 604 of FIG. 6. Referring to FIG. 9A, a first example 1600 includes the hydraulic circuit 500 that includes the hydraulic accumulator 510. The hydraulic accumulator 510 is configured to store hydraulic fluid and to maintain pressure on the hydraulic fluid. The first supply line 512 couples the hydraulic accumulator 510 to the impeller 162 and to the one-way valve 514 which is switchable between an open position in which the hydraulic fluid can flow through the valve 514 and a closed position in which hydraulic fluid cannot flow through the valve 514.

The first variable flow rate valve 518 regulates the flow of the hydraulic fluid between the impeller 162 and the turbine 166. Pressure and flow rate sensors 516 monitor the pressure and flow rate of the hydraulic fluid on both sides of the first variable flow rate valve 518.

The hydraulic fluid may exit the turbine 166 via the line 520. The second variable flow rate valve 519 regulates the flow of the hydraulic fluid from the turbine 166. The pressure and flow rate sensors 516 monitor the pressure and flow rate of the hydraulic fluid exiting the turbine 166. As illustrated in FIG. 9A, the valves 514, 518, 519 are in the closed position, and the propulsion system is in a charging or non-active state.

The hydraulic circuit 500 further includes the heat exchanger 530 to exchange heat from the hydraulic fluid. The hydraulic fluid reservoir 540 is configured to store hydraulic fluid which overflows from the hydraulic circuit 500. In pneumatic implementations, the hydraulic fluid reservoir 540 may be a fluid reservoir configured to store excess compressible fluids, such as air. Additionally or alternatively, in such implementations ambient atmosphere may be used as a fluid reservoir and fluid (e.g., air) may be added or removed from a pneumatic circuit via inlet and discharge ports.

In operation, power from the primary powerplant 606 is applied to the impeller 162 to rotate the impeller 162. When the valve 514 is closed such that hydraulic fluid cannot flow through valve 514 and the valves 518, 519 are opened, the hydraulic fluid flows from the impeller 162 to the turbine 166, which drives the turbine 166 to rotate the driveshaft 604 to drive the fan 602. To activate the augmenting powerplant to rotate the driveshaft 604 and drive the fan 602, the accumulator 510 is opened such that pressurized fluid stored in accumulator 510 flows into the turbine 166, as illustrated by the dotted and dashed line in FIG. 9A.

To stop the augmenting powerplant 608 from rotating the driveshaft 604, the first variable flow rate valve 518, the second variable flow rate valve 519, a valve of the accumulator 510, or a combination thereof, are closed to reduce (or stop) the flow of the pressurized fluid stored in the accumulator 510 to the turbine 166, thereby reducing the amount of power transmitted to the fan 602. When the amount of the pressurized fluid passing through impeller 162 drops sufficiently power is no longer transmitted between the accumulator 510 and the turbine 166, and the augmenting powerplant ceases to rotate the driveshaft 604 and drive the fan 602. The primary powerplant may continue to rotate the driveshaft 604 to drive the fan 602.

The augmenting powerplant may rotate the driveshaft 604 for such length of time as to allow the accumulator 510 to be depressurized and the hydraulic fluid in the hydraulic circuit 500 attaining ambient pressure. The length of time to depressurize the accumulator 510 depends on the maximum capacity of the accumulator 510, a maximum allowable pressure in accumulator 510 and line 512, a mass moment of inertia of the fan 602, aerodynamic resistance of the fan 602, and the efficiency of turbine 166. The design of the hydraulic system may be based on the maximum size and allowable pressure of the accumulator 510 and Federal Aviation Regulations (FAR). To illustrate, the accumulator 510 may store energy for a takeoff of an aircraft at maximum takeoff weight at a highest operating temperature and altitude, for a climb out maneuver with one engine inoperative, for one or more go-around maneuvers, and for a contingency power reserve.

FIG. 9B is a second example 1700 includes a hydraulic circuit 590 to selectively provide power from the augmenting powerplant (e.g., the clutch assembly 160) to rotate a driveshaft, such as the driveshaft 604 of FIG. 6. Many components of the circuit 590 depicted in FIG. 9B are the same as the analogous components depicted in the hydraulic circuit 500 of FIGS. 5A and 9A, and in the interest of clarity these components will not be described in detail. Referring to FIG. 9B, the circuit 590 includes a two-way directional valve 950 coupled to lines 520 and 522 that is switchable between an open position in which hydraulic fluid can flow through lines 520 and 522 and a closed position in which hydraulic fluid cannot flow through lines 520 and 522. As illustrated in FIG. 9B, the valve 950 is open and the propulsion system is in an active or power providing state.

In operation, when the valve 950 is in the open position, hydraulic fluid flows under pressure from the hydraulic accumulator 510 into the clutch assembly 160 and to the impeller 162 via line 512. The impeller 162 drives the turbine 166, such that the augmenting powerplant rotates the driveshaft 604 and drives the fan 602.

When the valve 950 is in the closed position, hydraulic fluid cannot flow between the impeller 162 and the turbine 166, thereby disengaging the augmenting powerplant from the driveshaft 604. The valve 950 may be controlled by a controller, such as the controller 610 of FIG. 6 or the controller 804 of FIG. 8.

As compared to the propulsion system 1500 of FIG. 8 which includes the hydraulic motor 806 and the pump 808, the propulsion systems of FIGS. 9A and 9B utilizes the hydraulic de-coupling unit or the hydraulic reduction gearbox as the augmenting powerplant to rotate the driveshaft 604. As compared to the propulsion system 1500 of FIG. 8, the propulsion systems of FIGS. 9A and 9B may be lighter and may improve efficiency of the primary powerplant 606 by consolidating the functionality of the de-coupler with hydraulic power augmentation. For example, the propulsion systems of FIGS. 9A and 9B do not include the hydraulic motor 806 and the pump 808, the impeller 162 of the clutch assembly 160 may function as the hydraulic motor 806 and the turbine 166 of the clutch assembly 160 may function as the pump 808.

FIG. 10 is a diagram that illustrates an example of a propulsion system 1800 that includes an electric augmenting powerplant. The propulsion system 1800 may include or correspond to the propulsion system 1300 of FIG. 6. The propulsion system 1800 includes the fan 602, the driveshaft, 604, the primary powerplant 606, the flight computer 802, the controller 804, a power controller 1006, an electric motor 1008 (e.g., an augmenting powerplant), and a battery 1010.

The power controller 1006 is configured to control operation of the electric motor 1008. The power controller 1006 is configured to activate and deactivate the electric motor 1008. For example, the power controller 1006 starts the electric motor 1008 and causes the electric motor 1008 to rotate the driveshaft 604 to drive the fan 602 by sending a power control signal 1066 to the electric motor 1008. The power controller 1006 may stop the electric motor 1008 or change an operational speed of the electric motor 1008 by ceasing to send the power control signal 1066 to the electric motor 1008 or by adjusting the power control signal 1066. Additionally, the power controller 1006 may receive a feedback input from the electric motor 1008, such as an RPM feedback input signal 1072. The power controller 1006 may receive an augmenting torque input signal 1064 from the controller 804. The power controller 1006 may activate, deactivate, or adjust an operational speed of the electric motor 1008 based on the augmenting torque input signal 1064 from the controller 804. For example, the power controller 1006 adjusts an RPM of the electric motor 1008 by adjusting the power control signal 1066, such as by adjusting a frequency of a sine wave of the power control signal 1066. As illustrated in FIG. 10, the power controller 1006 is separate from the controller 804. In other implementations, the power controller 1006 may be integrated into the controller 804.

The electric motor 1008 is configured to rotate the driveshaft 604 to rotate the fan 602 during certain flight stages. For example, the electric motor 1008 rotates the driveshaft 604 during the first flight stage (e.g., takeoff or climb) and does not rotate the driveshaft 604 during the second flight stage. The electric motor 1008 may include or correspond to, for example, a three-phase electric motor, although it should be realized that a single phase motor, a multi-phase motor, or a direct current motor may be utilized. The electric motor 1008 may be coupled in series with or in parallel to the primary powerplant 606 as described with reference to FIG. 7. Specifically, the electric motor 1008 may be coupled coaxially with primary powerplant 606 or may be coupled to the driveshaft 604 via an auxiliary driveshaft and an auxiliary gearbox.

The battery 1010 is configured to store energy to power the electric motor 1008. The battery 1010 may include or correspond to a chemical current reservoir, an electrostatic current reservoir, or a combination thereof. A chemical reservoir may include low-volatility, light-weight batteries such as lithium-ion batteries, lithium polymer batteries, and air-metal batteries. An electrostatic current reservoir may include one or more electro-static capacitors (e.g., a super capacitor) and a management circuit that enables a slow current draw for the electrostatic current reservoir and the load circuit. The energy storage capacity of the battery 1010 may be based on operating parameters of the propulsion system and the Federal Aviation Regulations (FAR), as described with reference to FIG. 9A.

In some implementations, the propulsion system 1800 includes the de-coupler 814. The de-coupler 814 is configured to decouple the electric motor 1008 from the driveshaft 604 and the fan 602. The de-coupler 814 may include or correspond to a clutch, such as the clutch assembly 160 of FIG. 1. The de-coupler 814 may be controlled by the controller 804 or the power controller 1006.

In some implementations, the propulsion system 1800 includes an electrical converter 1012 configured to convert an output of the power controller 1006, an output of the battery 1010, or both. The electrical converter 1012 is configured to convert a current, a voltage, or both, of an output, such as a DC to DC converter as illustrated in FIG. 10. In such implementations, the electric motor 1008 also functions as a generator (e.g., a motor-generator) and provides power to components of the aircraft (e.g., auxiliary electric loads). To illustrate, rotation of the driveshaft 604 causes the electric motor 1008 to generate electricity (e.g., AC current). As illustrated in FIG. 10, the electric motor 1008 generates three-phase AC current and the power controller 1006 converts the three-phase AC current to DC current. The DC current is provided to the auxiliary electric loads 1016 via the electrical converter 1012 which may increase or decrease a voltage of the DC current. In some implementations, the electric motor 1008 functions as a motor to drive the fan 602 during the first flight stage (e.g., takeoff) and functions as a generator to generate electricity during the second flight stage (e.g., cruise).

Prior to operation, the battery 1010 may be charged by an off-board charging system. Additionally or alternatively, the battery 1010 may be charged by a component or a system on board the aircraft, such as the APU. The battery 1010 stores energy to power the electric motor 1008 during certain flight stages.

During operation, the flight computer 802 may receive an input 860 from a user (e.g., a pilot) or a sensor regarding takeoff conditions. The flight computer 802 generates a power input based on the takeoff conditions and transmits a power input signal 1062 representing the power input to the controller 804. The controller 804 calculates an amount of augmenting torque to be output by the augmenting powerplant (e.g., the electric motor 1008) based on the power input signal 1062. The controller 804 transmits the augmenting torque input signal 1064 representing the desired augmenting torque to the power controller 1006. The power controller 1006 may set or adjust the power control signal 1066 (e.g., a frequency of the power control signal 1066) based on the augmenting torque input signal 1064 representing desired augmenting torque received from the controller 804. Additionally, the power controller 1006 may set or adjust the power control signal 1066 based on the RPM feedback input signal 1072.

The electric motor 1008 rotates the driveshaft 604 responsive to the power control signal 1066. The electric motor 1008 rotates the driveshaft 604 along with the primary powerplant 606 during the first flight stage. The flight computer 802 may receive a second input from the user or the sensor. The second input may be associated with or indicative of a transition from a first flight stage to a second flight stage. For example, the second input may be associated with a cruising speed (or an amount of thrust corresponding to a cruising speed). The flight computer 802 generates a second power input and transmits the power input signal 1062 representing the second power input to the controller 804. The controller 804 determines (or calculates) a second amount of augmenting torque to be output by the augmenting powerplant (e.g., the electric motor 1008) based on the second power input. The controller 804 transmits the augmenting torque input signal 1064 signal representing the second amount of desired augmenting torque to the power controller 1006. The power controller 1006 may set or adjust the power control signal 1066 (e.g., a frequency of the power control signal 1066) based on the second amount of augmenting torque. When the second input is associated with the transition from the first flight stage to the second flight stage, the power controller 1006 may cease providing the power control signal 1066 to the electric motor 1008. In response, the electric motor 1008 ceases driving the fan 602, and the primary powerplant 606 may continue to drive the fan 602.

Additionally, the controller 804 may be configured to adjust an amount augmenting torque based on feedback (e.g., a power output) from the propulsion system 1800. For example, the controller 804 may estimate an amount of augmenting torque and may increase or decrease the estimated amount of augmenting torque based on the power output.

After the aircraft has landed, the battery 1010 may be charged (e.g., recharged) by the off-board charging system or by a charging system on-board the aircraft, such as an APU. Additionally or alternatively, the electric motor 1008 may charge the battery 1010 during flight (e.g., during the second flight stage, such as the cruise flight stage). To illustrate, the power controller 1006 may cease providing the power control signal 1066 to the electric motor 1008 and/or the controller 804 or the power controller 1006 may send a control signal (not shown) to the electric motor 1008, the de-coupler 814, or both, to operate the electric motor 1008 as a generator. For example, the control signal may engage an alternator of the electric motor 1008 responsive to the electric motor 1008 receiving the control signal. The electric motor 1008 may generate electricity (e.g., AC current) and provide the electricity to the power controller 1006. In such implementations, the power controller 1006 converts a current type of the electricity, such as from the AC current to DC current, and provides the electricity (e.g., the DC current) to the battery 1010 to charge the battery 1010. By charging the battery 1010 during flight, the battery 1010 may be sized to store a charge for takeoff and/or climb only and thus, the battery 1010 may be smaller than a battery that is not charged during flight. Accordingly, weight of the aircraft may decrease. By not charging the battery 1010 during flight, a cooling system used to cool charging circuitry and/or cool the battery 1010 during charging may be eliminated. Also, fuel efficiency may increase as the electric motor 1008 will not be siphoning power (or siphoning less power) from the primary powerplant 606 and rotating driveshaft 604 to charge the battery 1010 (or the provide power to the aircraft).

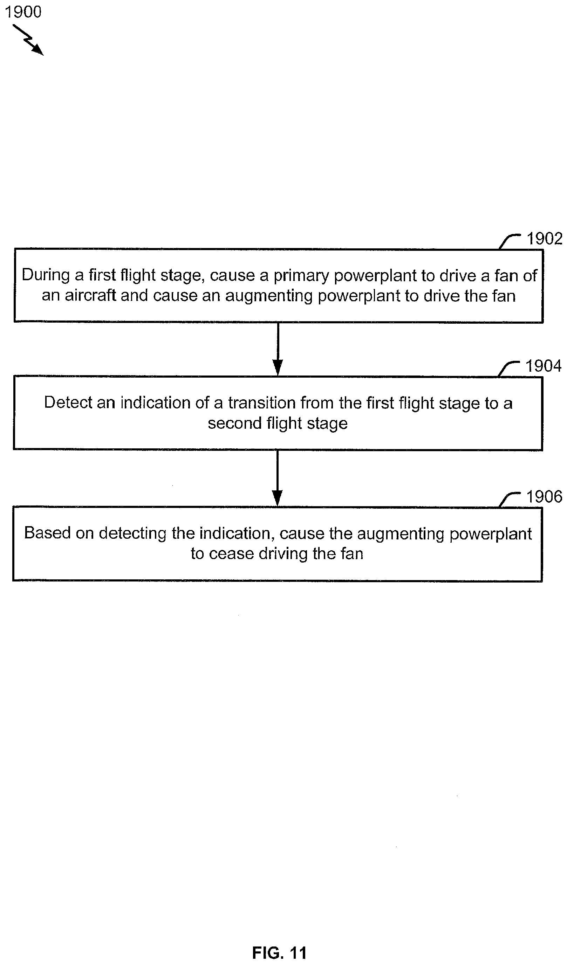

FIG. 11 is a flowchart of a method 1900 of controlling a propulsion system. The propulsion system may include or correspond to the propulsion system 1300 of FIG. 6, the propulsion system 1500 of FIG. 8, or the propulsion system 1800 of FIG. 10. The method 1900 may be performed by the controller 610 of FIG. 6, the controller 804 of FIGS. 8 and 10, or the power controller of FIG. 10. The method 1900 includes, at 1902, during a first flight stage, causing a primary powerplant to drive a fan of an aircraft and causing an augmenting powerplant to drive the fan. For example, the first flight stage may include or may correspond to a takeoff flight stage, a climb flight stage, a go-around flight stage, etc. Additionally or alternatively, the primary powerplant may correspond to the primary powerplant 606 of FIG. 6, the fan may correspond to the fan 602 of FIG. 6, the augmenting powerplant may correspond to the augmenting powerplant 608 of FIG. 6, and the controller 610 may cause the primary powerplant and the augmenting powerplant to drive the fan as described above with reference to FIG. 6.

In some implementations, causing the primary powerplant and the augmenting powerplant to drive the fan includes initiating transmission of a first control signal to open a valve. For example, the valve may correspond to the valve 514 of FIG. 9A, the first control signal may correspond to the one or more control signals 650 of FIG. 6, and the power controller 1006 may initiate transmission of the control signal as described above with reference to FIG. 10.

The method 1900 of FIG. 11 further includes, at 1904, detecting an indication of a transition from the first flight stage to a second flight stage. For example, the second flight stage may correspond to a cruise flight stage, as described above with reference to FIG. 6. Alternatively or additionally, the second flight stage may correspond to a secondary climb flight stage, a descent flight stage, a hold flight stage, etc., as described above with reference to FIG. 6. In some implementations, the second flight stage is detected by the controller 610 as described above with reference to FIG. 6. In some implementations, the indication includes a user input, a first flight stage indication, or a combination thereof, as described above with reference to FIG. 6.

The method 1900 of FIG. 11 further includes, at 1906, based on detecting the indication, causing the augmenting powerplant to cease driving the fan. For example, the controller 610 of FIG. 6, the controller 804 of FIGS. 8 and 10, the power controller 1006, or a combination thereof, may cause the augmenting powerplant to cease driving the fan by transmitting control signals (e.g., the one or more control signals 650 of FIG. 6) as described above with reference to FIGS. 6, 8, and 10.

In some implementations in which causing the primary powerplant and the augmenting powerplant to drive the fan includes initiating transmission of a first control signal to open a valve as described above, causing the augmenting powerplant to cease driving the fan includes initiating transmission of a second control signal to close the valve and initiating transmission of a third control signal to decouple the augmenting powerplant from the fan. For example, the second control signal may correspond to the second control signal described above with reference to FIG. 8, the third control signal may correspond to the third control signal described above with reference to FIG. 8, and the controller 804 may initiate transmission of the second and third control signals as described above with reference to FIG. 8.

In some implementations, the augmenting powerplant includes or corresponds to an electric motor as described above with reference to FIG. 10. In some of these implementations, causing the augmenting powerplant to cease driving the fan includes ceasing providing a power signal to the electric motor and decoupling the electric motor from the fan as described above with reference to FIG. 10.

In some implementations, the method 1900 of FIG. 11 further includes charging an accumulator or a battery prior to the first flight stage. For example, the accumulator may correspond to the accumulators 810, 812 of FIG. 8, the battery may correspond to the battery 1010 of FIG. 10, and the augmenting powerplant (e.g., the pump 808 or the electric motor 1008) may charge the accumulator or the battery by rotation of the driveshaft 604 as described above with reference to FIGS. 8 and 10.

In some implementations in which the battery is charged prior to the first flight stage, the method 1900 of FIG. 11 further includes generating, by the augmenting powerplant, electricity during the second flight stage. The electricity may be generated by the augmenting powerplant during the second flight stage by rotation of the driveshaft 604, as described above with reference to FIG. 10. In some implementations in which the augmenting powerplant generates electricity during the second flight stage, the method 1900 of FIG. 11 further includes providing the electricity generated from the augmenting powerplant to one or more components of an aircraft during the second flight stage. For example, the one or more components may include or may correspond to the auxiliary electric loads 1016 of FIG. 10, and the power controller 1006, the electrical converter 1012, or a combination thereof may provide the electricity generated from the augmenting powerplant to the one or more components as described above with reference to FIG. 10.

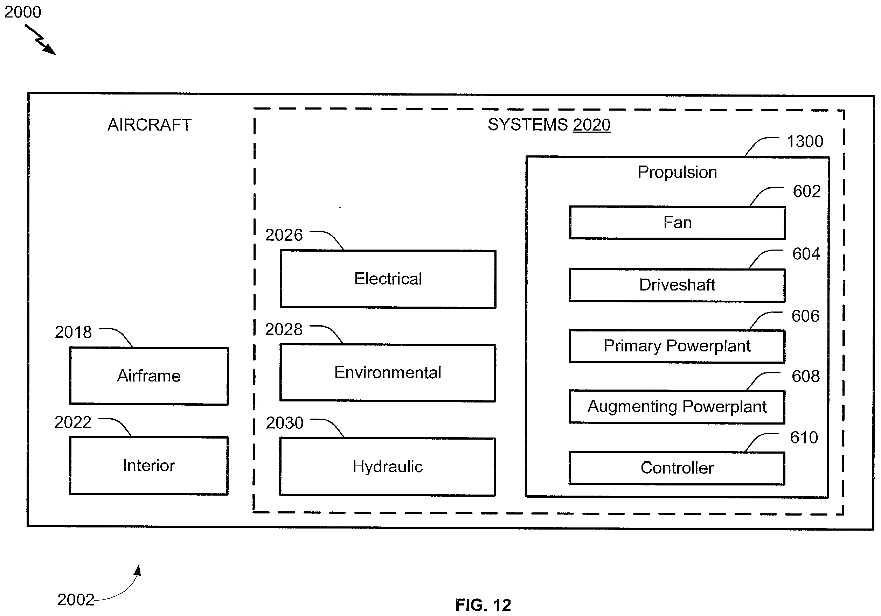

Referring to FIG. 12, a block diagram of an illustrative implementation of an aircraft 2002 that includes the propulsion system 1300 is shown and designated 2000. The aircraft 2002 may include or correspond to the aircraft 100 of FIG. 1. The aircraft 2002 may be manned or unmanned (e.g., a drone or an unmanned aerial vehicle (UAV).

As shown in FIG. 12, the aircraft 2002 includes an airframe 2018, an interior 2022, and a plurality of systems 2020. The plurality of systems 2020 includes one or more of a propulsion system 1300, an electrical system 2026, a hydraulic system 2030, and an environmental system 2028. Any number of other systems may be included. The propulsion system 1300 includes the fan 602, the driveshaft 604, the primary powerplant 606, the augmenting powerplant 608, and the controller 610 of FIG. 6. The controller 610 is configured to execute computer-executable instructions (e.g., a program of one or more instructions) stored in a memory. The instructions, when executed, cause the controller 610, to perform one or more operations of the method 1900 of FIG. 11. In a particular implementation, the controller 610 includes a processor and the memory may include a non-transitory computer-readable medium.

**Claims**

1. An aircraft propulsion system (1300, 1500) comprising:

   a fan (602);
   a primary powerplant (606) coupled to the fan (602) via a driveshaft (604) and configured to rotate the fan (602) during a first flight stage and during a second flight stage;
   an augmenting powerplant (608) coupleable with the fan (602); and
   a controller (610) configured to cause the augmenting powerplant (608) to drive the fan (602) during the first flight stage, and to cause the augmenting powerplant (608) to cease driving the fan (602) based on an indication of a transition from the first flight stage to the second flight stage,
   a hydraulic clutch assembly (160) having an impeller (162) and a turbine (166),
   wherein power from the primary powerplant (606) can be applied to the impeller (162) and the turbine (166) can rotate the driveshaft (604) to drive the fan (602), and
   a hydraulic circuit (500; 590) to regulate the clutch assembly (160) having a hydraulic accumulator (510) coupled to the impeller (162) by a first supply line (512) and a return line (520) at the exit of the turbine, wherein valves (514, 518, 519; 518, 950) allow fluid coming from the accumulator (510) to flow into the turbine (166) when the augmenting powerplant (608) is activated and the flow of the pressurized fluid stored in the accumulator (510) to the turbine (166) is reduced or stopped to stop the augmenting powerplant (608).

2. The aircraft propulsion system (1300, 1500) of claim 1, wherein the first flight stage corresponds to a takeoff flight stage, and wherein the second flight stage corresponds to a cruise flight stage.

3. The aircraft propulsion system (1300, 1500) of any of claims 1 to 2, wherein the augmenting powerplant (608) comprises a hydraulic motor (806) or a pneumatic motor.

4. The aircraft propulsion system (1300, 1500) of any of claims 1 to 3, wherein the primary powerplant (606) is a gas turbine engine (120).

5. The aircraft propulsion system (1300, 1500) of any of claims 1 to 4, wherein the primary powerplant (606) has a maximum thrust output that is insufficient to satisfy a thrust-based operating condition.

6. The aircraft propulsion system (1300) of any of claims 1 to 5, further comprising an auxiliary gearbox (726) coupleable to the augmenting powerplant (608) and to a driveshaft (604) of the primary powerplant (606), the auxiliary gearbox (726) configured to rotate the driveshaft (604) based on torque generated by the augmenting powerplant (608).

7. A method (1900) of controlling a propulsion system (1300, 1500) according to one of claims 1 to 6, the method comprising:

   during (1902) a first flight stage, causing a primary powerplant (606) to drive a fan (602) of an aircraft (100) and causing an augmenting powerplant (608) to drive the fan (602) by allowing fluid coming from the accumulator (510) to flow into the turbine (166);
   detecting (1904) an indication of a transition from the first flight stage to a second flight stage; and
   based (1906) on detecting the indication, causing the augmenting powerplant (608) to cease driving the fan (602) by reducing or stopping the flow of the pressurized fluid stored in the accumulator (510) to the turbine (166).

8. The method of claim 7, further comprising charging the accumulator (510) prior to the first flight stage.

**Patentansprüche**

1. Flugzeugantriebssystem (1300, 1500), aufweisend:

   einen Fan (602);
   ein primäres Triebwerk (606), das mit dem Fan (602) über eine Antriebswelle (604) verbunden und zum Drehen des Fans (602) während einer ersten Flugphase und während einer zweiten Flugphase ausgebildet ist;
   ein Verstärkungstriebwerk (608), das mit dem Fan (602) verbindbar ist; und
   eine Steuerung (610), die so konfiguriert ist, dass sie das Verstärkungstriebwerk (608) während der ersten Flugphase zum Antreiben des Fans (602) veranlasst und das Verstärkungstriebwerk (608) auf Basis einer Anzeige eines Übergangs von der ersten Flugphase zur zweiten Flugphase zum Beenden des Antreibens des Fans (602) veranlasst,
   eine hydraulische Kupplungsbaugruppe (160), die ein Laufrad (162) und eine Turbine (166) aufweist, wobei das Laufrad (162) mit Kraft vom primären Triebwerk (606) beaufschlagt werden kann und die Turbine (166) die Antriebswelle (604) zum Antreiben des Fans (602) drehen kann, und
   einen Hydraulikkreis (500; 590) zum Regeln der Kupplungsbaugruppe (160), der einen hydraulischen Akkumulator (510) aufweist, der mit dem Laufrad (162) durch eine erste Versorgungsleitung (512) und eine Rückleitung (520) am Ausgang der Turbine verbunden ist, wobei Ventile (514, 518, 519; 518, 950) vom Akkumulator (510) kommendes Fluid in die Turbine (166) strömen lassen, wenn das Verstärkungstriebwerk (608) aktiviert ist und der im Akkumulator (510) gespeicherte Strom von Druckfluid zur Turbine (166) reduziert oder gestoppt wird, um das Verstärkungstriebwerk (608) zu stoppen.

2. Flugzeugantriebssystem (1300, 1500) nach Anspruch 1, wobei die erste Flugphase einer Startflugphase entspricht und wobei die zweite Flugphase einer Reiseflugphase entspricht.

3. Flugzeugantriebssystem (1300, 1500) nach einem der Ansprüche 1 bis 2, wobei das Verstärkungstriebwerk (608) einen Hydraulikmotor (806) oder einen Pneumatikmotor aufweist.

4. Flugzeugantriebssystem (1300, 1500) nach einem der Ansprüche 1 bis 3, wobei das primäre Triebwerk (606) ein Gasturbinentriebwerk (120) ist.

5. Flugzeugantriebssystem (1300, 1500) nach einem der Ansprüche 1 bis 4, wobei das primäre Triebwerk (606) eine maximale Schubleistung aufweist, die für den Bedarf einer schubbasierten Betriebsbedingung nicht ausreicht.

6. Flugzeugantriebssystem (1300) nach einem der Ansprüche 1 bis 5, ferner aufweisend ein Zusatzgetriebe (726), das mit dem Verstärkungstriebwerk (608) und mit einer Antriebswelle (604) des primären Triebwerks (606) verbindbar ist, wobei das Zusatzgetriebe (726) zum Drehen der Antriebswelle (604) auf der Grundlage eines vom Verstärkungstriebwerk (608) erzeugten Drehmoments ausgebildet ist.

7. Verfahren (1900) des Steuerns eines Antriebssystems (1300, 1500) nach einem der Ansprüche 1 bis 6, wobei das Verfahren Folgendes umfasst:

   während (1902) einer ersten Flugphase, Veranlassen eines primären Triebwerks (606) zum Antreiben eines Fans (602) eines Flugzeugs (100) und Veranlassen eines Verstärkungstriebwerks (608) zum Antreiben des Fans (602), indem ein Strom von vom Ackumulator (510) kommenden Fluid in die Turbine (166) ermöglicht wird;
   Erkennen (1904) einer Anzeige eines Übergangs von der ersten Flugphase zu einer zweiten Flugphase; und
   auf Basis (1906) des Erkennens der Anzeige, Veranlassen des Verstärkungstriebwerks (608), den Antrieb des Fans (602) zu beenden, indem der Strom des im Akkumulator (510) gespeicherten Druckfluids zur Turbine (166) reduziert oder gestoppt wird.

8. Verfahren nach Anspruch 7, weiterhin umfassend das Aufladen des Akkumulators (510) vor der ersten Flugphase.

**Revendications**

1. Système de propulsion (1300, 1500) d'aéronef comprenant :

   une soufflante (602) ;

un groupe motopropulseur primaire (606) accouplé à la soufflante (602) via un arbre d'entraînement (604) et configuré pour faire tourner la soufflante (602) durant une première étape de vol et durant une seconde étape de vol ;

un groupe motopropulseur d'augmentation (608) pouvant être accouplé à la soufflante (602) ; et

un dispositif de commande (610) configuré pour amener le groupe motopropulseur d'augmentation (608) à entraîner la soufflante (602) durant la première étape de vol, et pour amener le groupe motopropulseur d'augmentation (608) à cesser d'entraîner la soufflante (602) sur la base d'une indication d'une transition de la première étape de vol à la seconde étape de vol,

un ensemble d'embrayage (160) hydraulique ayant un rotor (162) et une turbine (166),

dans lequel de l'énergie en provenance du groupe motopropulseur primaire (606) peut être appliquée au rotor (162) et la turbine (166) peut faire tourner l'arbre d'entraînement (604) pour entraîner la soufflante (602), et

un circuit hydraulique (500 ; 590) pour réguler l'ensemble d'embrayage (160) ayant un accumulateur (510) hydraulique accouplé au rotor (162) par une première conduite d'alimentation (512) et une conduite de retour (520) au niveau de la sortie de la turbine, dans lequel des vannes (514, 518, 519 ; 518, 950) permettent à un fluide venant de l'accumulateur (510) de s'écouler dans la turbine (166) lorsque le groupe motopropulseur d'augmentation (608) est activé et l'écoulement du fluide sous pression stocké dans l'accumulateur (510) jusqu'à la turbine (166) est réduit ou arrêté pour arrêter le groupe motopropulseur d'augmentation (608).

2. Système de propulsion (1300, 1500) d'aéronef selon la revendication 1, dans lequel la première étape de vol correspond à une étape de vol de décollage, et dans lequel la seconde étape de vol correspond à une étape de vol de croisière.

3. Système de propulsion (1300, 1500) d'aéronef selon l'une quelconque des revendications 1 et 2, dans lequel le groupe motopropulseur d'augmentation (608) comprend un moteur hydraulique (806) ou un moteur pneumatique.

4. Système de propulsion (1300, 1500) d'aéronef selon l'une quelconque des revendications 1 à 3, dans lequel le groupe motopropulseur primaire (606) est une turbine à gaz (120).

5. Système de propulsion (1300, 1500) d'aéronef selon l'une quelconque des revendications 1 à 4, dans lequel le groupe motopropulseur primaire (606) a une sortie de poussée maximale qui est insuffisante pour satisfaire à une condition de fonctionnement basée sur la poussée.

6. Système de propulsion (1300) d'aéronef selon l'une quelconque des revendications 1 à 5, comprenant en outre une boîte à engrenages auxiliaire (726) pouvant être accouplée au groupe motopropulseur d'augmentation (608) et à un arbre d'entraînement (604) du groupe motopropulseur primaire (606), la boîte à engrenages auxiliaire (726) étant configurée pour faire tourner l'arbre d'entraînement (604) sur la base d'un couple généré par le groupe motopropulseur d'augmentation (608).

7. Procédé (1900) de commande d'un système de propulsion (1300, 1500) selon l'une des revendications 1 à 6, le procédé comprenant :

durant (1902) une première étape de vol, le fait d'amener un groupe motopropulseur primaire (606) à entraîner une soufflante (602) d'un aéronef (100) et le fait d'amener un groupe motopropulseur d'augmentation (608) à entraîner la soufflante (602) en permettant à un fluide venant de l'accumulateur (510) de s'écouler dans la turbine (166) ;

la détection (1904) d'une indication d'une transition de la première étape de vol à une seconde étape de vol ; et

sur la base (1906) de la détection de l'indication, le fait d'amener le groupe motopropulseur d'augmentation (608) à cesser d'entraîner la soufflante (602) en réduisant ou arrêtant l'écoulement du fluide sous pression stocké dans l'accumulateur (510) jusqu'à la turbine (166).

8. Procédé selon la revendication 7, comprenant en outre la charge de l'accumulateur (510) avant la première étape de vol.

```
┌─────────────────────────────────────────────────────────────────┐
│                           AIRCRAFT                                │
│                             100                                   │
│   ┌─────────────────────────────────────────────────────────┐   │
│   │                       FUSELAGE                            │   │
│   │                         102                               │   │
│   │                                                           │   │
│   └─────────────────────────────────────────────────────────┘   │
│   ┌─────────────────────────────────────────────────────────┐   │
│   │                  PROPULSION SYSTEM                        │   │
│   │                        110                                │   │
│   │   ┌─────────────────────────────────────────────────┐   │   │
│   │   │                    ENGINE                         │   │   │
│   │   │                     120                           │   │   │
│   │   │                                                   │   │   │
│   │   └─────────────────────────────────────────────────┘   │   │
│   │   ┌─────────────────────────────────────────────────┐   │   │
│   │   │            DRIVE ASSEMBLY 130                     │   │   │
│   │   │  ┌──────────────────┐   ┌──────────────────┐     │   │   │
│   │   │  │ FIRST DRIVESHAFT │   │   FIRST FAN      │     │   │   │
│   │   │  │      140         │   │     150          │     │   │   │
│   │   │  └──────────────────┘   └──────────────────┘     │   │   │
│   │   │  ┌──────────────────┐   ┌──────────────────┐     │   │   │
│   │   │  │ CLUTCH ASSEMBLY  │   │    GEARBOX       │     │   │   │
│   │   │  │      160         │   │     170          │     │   │   │
│   │   │  └──────────────────┘   └──────────────────┘     │   │   │
│   │   │  ┌──────────────────┐   ┌──────────────────┐     │   │   │
│   │   │  │ SECOND DRIVESHAFT│   │   SECOND FAN     │     │   │   │
│   │   │  │      180         │   │     190          │     │   │   │
│   │   │  └──────────────────┘   └──────────────────┘     │   │   │
│   │   └─────────────────────────────────────────────────┘   │   │
│   └─────────────────────────────────────────────────────────┘   │
└─────────────────────────────────────────────────────────────────┘
```

FIG. 1

FIG. 2A

FIG. 2B

FIG. 2C

FIG. 3A

FIG. 3B

EP 3 318 495 B1

700

192

190

150

152

144

142

ENGINE 120

140

114

180

**FIG. 3C**

FIG. 4A

FIG. 4B

FIG. 4C

EP 3 318 495 B1

**1100**

**500**

**Heat Exchanger 530**

510
514
516
160
512
519
516
516
162
140
**Power from Power Source**
512
166
**Power to Fan**
516
**Turbine**
**Turbine by-pass line**
518
540 — **R**
**Hydraulic Reservoir**

**Hydraulic De-coupling Device**

**FIG. 5A**

FIG. 5B

EP 3 318 495 B1

1300

Fan 602

Driveshaft 604

User
Input

Primary Powerplant 606

Controller 610

Augmenting Powerplant
608

650

Control
Signal(s)

FIG. 6

FIG. 7

FIG. 8

FIG. 9A

EP 3 318 495 B1

**FIG. 9B**

**FIG. 10**

EP 3 318 495 B1

1900

┌─ 1902

During a first flight stage, cause a primary powerplant to drive a fan of an aircraft and cause an augmenting powerplant to drive the fan

┌─ 1904

Detect an indication of a transition from the first flight stage to a second flight stage

┌─ 1906

Based on detecting the indication, cause the augmenting powerplant to cease driving the fan

**FIG. 11**

**2000**

AIRCRAFT

SYSTEMS <u>2020</u>

1300

Propulsion

602

Fan

604

Driveshaft

606

Primary Powerplant

608

Augmenting Powerplant

610

Controller

2026

Electrical

2028

Environmental

2030

Hydraulic

2018

Airframe

2022

Interior

**2002**

**FIG. 12**

EP 3 318 495 B1

37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2270326 A